# EUROPÄISCHE PATENTSCHRIFT

(11) **EP 2 847 543 B1**
(45) Veröffentlichungstag und Bekanntmachung des Hinweises auf die Patenterteilung: **06.07.2016**
(21) Anmeldenummer: 12795436.0
(22) Anmeldetag: 04.12.2012
(51) Int. Cl.: G01B 11/00, G01B 11/25

(54) **MESSEINRICHTUNG UND VERFAHREN ZUM VERMESSEN EINES MESSOBJEKTS**
MEASURING DEVICE AND METHOD FOR MEASURING A MEASURING OBJECT
DISPOSITIF ET PROCÉDÉ DE MESURE DESTINÉ À MESURER UN OBJET DE MESURE

(30) Priorität: 07.08.2012 WO PCT/EP2012/065477
(43) Veröffentlichungstag der Anmeldung: 18.03.2015
(73) Patentinhaber: Carl Zeiss Industrielle Messtechnik GmbH, 73447 Oberkochen (DE)
(72) Erfinder: WESTPHAL, Peter, 07743 Jena (DE); ENGEL, Thomas, 73432 Aalen (DE)
(74) Vertreter: Witte, Weller & Partner Patentanwälte mbB
(86) Internationale Anmeldenummer: PCT/EP2012/074381
(87) Internationale Veröffentlichungsnummer: WO 2014/023364

(56) Entgegenhaltungen:
- WO-A1-01/51885
- FR-A1- 2 748 322
- US-A- 5 878 152
- US-A- 5 880 846
- R A Petrozzo und S W Singer: "Telecentric lenses simpify non contact geometry", , 15. Oktober 2001 (2001-10-15), XP002694012, Gefunden im Internet: URL:http://www.schneideroptics.com/pdfs/in dustrial/Telecentric_Lenses.pdf [gefunden am 2013-03-18]

## Beschreibung

Die vorliegende Erfindung betrifft eine Messeinrichtung zum Vermessen eines Messobjekts, mit einer Beleuchtungseinrichtung zum Beleuchten des Messobjekts mit einem Beleuchtungsmuster, einer Mustererzeugungseinrichtung mit zumindest einem Mustererzeugungselement zum Herbeiführen einer ortsvarianten Intensitätsverteilung des Beleuchtungsmusters, und einer optischen Sensoranordnung zum Erfassen des von dem Messobjekt reflektierten und/oder gestreuten Beleuchtungsmusters.

Des Weiteren betrifft die vorliegende Erfindung eine Vorrichtung zum Vermessen eines Messobjekts mit einer solchen Messeinrichtung.

Des Weiteren betrifft die vorliegende Erfindung ein Verfahren zum Vermessen eines Messobjekts.

Eine derartige Messeinrichtung, eine derartige Vorrichtung und ein derartiges Verfahren sind beispielsweise aus der Druckschrift DE 199 55 702 A1 bekannt.

Die vorliegende Erfindung beschäftigt sich im Allgemeinen mit berührungslosen, optischen Sensoren zur topologischen Erfassung von Oberflächen von Messobjekten. Die Haupteinsatzgebiete solcher Sensoren sind die industrielle Messtechnik, d.h. die metrologische Vermessung von mechanischen Werkstücken. Grundsätzlich können derartige Sensoren jedoch in allen bildgebenden Operationen eingesetzt werden.

Ein Vorteil derartiger berührungslos messender, optischer Sensoren liegt in erster Linie darin, dass gegenüber einem taktil messenden Sensor eine Oberfläche deutlich schneller vermessen werden kann.

Solche taktil messenden Messsysteme sind im Stand der Technik grundsätzlich bekannt. Mit Hilfe eines Tastkopfes bzw. Messtasters wird dabei die zu vermessende Oberflächentopologie angetastet. Der Messkopf trägt ein Antastelement, z.B. eine Rubinkugel und ist Bestandteil eines Koordinatenmessgeräts, das den Tastkopf mit dem darin befestigten Antastelement mit der zu vermessenden Oberfläche in Berührung bringt. Über Dehnungsmessstreifen oder andere Sensoren wird die Lage und Andruckkraft des Tastkopfes bzw. des Tastelements bestimmt. Durch punktuelles oder kontinuierliches taktiles Abtasten wird die Oberflächenkontur ermittelt. Jedoch ist die Geschwindigkeit derartiger taktil messender Systeme begrenzt. Dies ergibt sich zum einen dadurch, dass immer ein mechanischer Kontakt zu der zu vermessenden Oberfläche benötigt wird und zum anderen immer nur eine punktuelle Messung erfolgt. Zwar kann durchaus vorgesehen sein, dass ein Pfad auf der Oberfläche im Rahmen eines sogenannten "Scan-Vorgangs" automatisch abgefahren wird, auch dies ist jedoch nur eine Abfolge punktueller Messungen. Die Größe des Tastelements limitiert außerdem die messbaren Radien der Oberfläche, d.h. kleine Vertiefungen können in der Regel nicht erfasst werden. Darüber hinaus kann es unter Umständen durch sehr harte Tastelemente zu einer Beschädigung von sehr empfindlichen Oberflächen kommen.

Des Weiteren wurden monochromatische Konfokalsensoren vorgeschlagen, die monochromatisches Licht, in der Regel einen Laserstrahl, in die Nähe der zu vermessenden Oberfläche fokussieren. Das von der zu vermessenden Oberfläche zurück reflektierte oder gestreute Licht wird in oder in der Nähe einer konfokalen Ebene auf eine Lochblende abgebildet. Die von der Lochblende durchgelassene Lichtleistung ist ein Maß für den Abstand der objektseitigen Fokusebene zur Oberfläche. Beispielsweise durch Konstanthalten der durchgelassenen Lichtleistung kann die Oberfläche stets im Fokus des Sensors gehalten werden. Die Erfassung der Oberflächentopologie kann dann ähnlich wie bei einem taktilen Sensor durch punktweise Messungen entlang eines vorgegebenen Pfads erfolgen. Entsprechend erfolgt die Messung hier auch nur punktuell und die Anforderungen an die Regelungsgenauigkeit und den einzustellenden Arbeitsabstand sind relativ genau.

Es sind auch chromatische Konfokalsensoren bekannt, bei denen ein spektral breitbandiges Licht in die Nähe der zu vermessenden Oberfläche fokussiert wird. Die Fokussierung erfolgt mit einer Optik, die eine große chromatische Längsaberration aufweist, d.h. die Fokalebene variiert stark abhängig von der Wellenlänge des Lichts. Ebenfalls mit Hilfe einer konfokalen Lochblende und eines Spektrometers kann der Abstand des Sensors zur Oberfläche über einen größeren Arbeitsabstandsbereich ermittelt werden, dessen Länge sich aus der Differenz zwischen der objektseitigen Schnittweite der größten und der kleinsten Wellenlänge des breitbandigen Lichts ergibt. Auch hier erfolgt die Messung jeweils jedoch nur punktuell, wie dies beispielsweise in der Druckschrift EP 1 287 311 B1 gezeigt ist.

Des Weiteren sind sogenannte Streifenbeleuchtungsverfahren oder Deflektrometrieverfahren bekannt, die zumeist Streifenmuster auf die zu vermessende Oberfläche projizieren. Die zu vermessende Oberflächentopologie verformt die von der Oberfläche reflektierten Streifen. Die reflektierten Streifen werden mit einer Kamera, d.h. einem zweidimensionalen Sensorarray erfasst. Aus der gemessenen Verformung des reflektierten Streifenmusters kann auf die Oberflächentopologie zurückgeschlossen werden. Eine einfache Variante der Streifenbeleuchtung ist die Laserlinienbeleuchtung, bei der dann jeweils die Form einer auf das Messobjekt gestrahlten Laserlinie ausgewertet wird. Mit diesem Verfahren kann zwar eine größere Fläche erfasst und vermessen werden, dafür ist jedoch die Messgenauigkeit geringer als bei den voranstehend genannten punktuellen Messverfahren. Bei stark streuenden Oberflächen können darüber hinaus Probleme aufgrund von Mehrdeutigkeiten bei der Auswertung auftreten.

Darüber hinaus sind interferometrische Verfahren bekannt, bei denen die zu vermessende Oberfläche mit kohärentem oder teilkohärentem Licht bestrahlt und in Reflexion betrachtet wird. Die Oberflächentopografie beeinflusst dann in der Tiefe, d.h. in Ausbreitungsrichtung oder lateral, d.h. senkrecht zu der Ausbreitungsrichtung, die Interferenz des Lichts. Interferometrische Verfahren mit schmalbandigem Laserlicht sind beispielsweise zur hochgenauen Vermessung von Linsenoberflächen geeignet. Bei der sog. Weißlichtinterferometrie bzw. der optischen Kohärenztomografie (OCT) kommt spektral breitbandiges Licht zum Einsatz. Zur Klasse der interferometrischen Verfahren gehört insgesamt auch die Holografie. Somit benötigen auch alle interferometrischen Verfahren einen Referenzstrahlengang, der jedoch stets eine hohe Störempfindlichkeit im Messaufbau aufweist.

Einige der voranstehend genannten Verfahren messen lediglich punktuell. Die flächig messenden Verfahren arbeiten stets mit einem Winkel zwischen der Beleuchtungs- und Betrachtungsrichtung. Insbesondere räumlich stark eingeschränkte Anwendungen, die nur begrenzte Sichtwinkel auf die zu vermessende Oberfläche erlauben, beispielsweise die Vermessung von Bohrungen oder Kanälen, erlauben jedoch keine großen Winkel zwischen der Beleuchtungs- und Betrachtungsrichtung, so dass damit auch die Genauigkeit der flächig messenden Verfahren abfällt.

In der eingangs genannten Druckschrift DE 109 55 702 A1 wird daher ein optisches Messverfahren vorgeschlagen, bei dem ein Leuchtpunkt oder ein Ring als Beleuchtungsmuster in die Richtung der zu vermessenden Oberfläche gestrahlt wird. Abhängig davon, ob die zu vermessende Oberfläche in dem Muster liegt, ergeben sich bestimmte Reflexionsfiguren, die dann ausgewertet werden können. Aus einer eventuellen Verzerrung des Musters kann darüber hinaus nicht nur der Abstand des vermessenden Punktes zu dem Sensor, sondern auch eine Neigung des angetasteten Oberflächenpunktes bestimmt und dadurch auf um den vermessenen Punkt herumliegende Punkte und deren Lage geschlossen werden.

Des Weiteren wurde beispielsweise in der Druckschrift DE 34 18 767 A1 vorgeschlagen, eine bestimmte Aberration, den Astigmatismus, zum punktuellen Vermessen von Oberflächentopografien heranzuziehen.

Die in den beiden voranstehend genannten Druckschriften gezeigten Verfahren schildern zwar Messsysteme, bei denen die Beleuchtungs- und die Betrachtungsrichtung im Wesentlichen parallel und koaxial zueinander verlaufen können, sie liefern jedoch nur für einen jeweils im Zentrum der jeweiligen Sensoraufnahme liegenden Punkt eine genaue Messung.

Die Druckschrift US 5 880 846 A zeigt ein Verfahren und eine Vorrichtung für ein farbkodiertes optisches Profifometer.

Die Druckschrift WO 01/51885 A1 zeigt ein Verfahren und eine Vorrichtung zum Messen der Höhe von Erhebungen.

Die Druckschrift FR 2 748 322 A1 zeigt eine weitere Vorrichtung für ein Triangulationsverfahren.

Die Druckschrift US 5 878 152 A zeigt ein Verfahren und eine Vorrichtung zum Erfassen eines Bildes eines Objekts unter Verwendung einer "Albedo Normalisierung".

Der Artikel "Telecentric Lenses simplify non contact geometry" von Petrozzo/Singer; XP 002 694 012 beschäftigt sich mit dem Einsatz von telezentrierten Objektiven in der Koordinatenmesstechnik.

Eine Aufgabe der vorliegenden Erfindung ist es daher, eine Messeinrichtung bereitzustellen, die die Nachteile der voranstehend genannten Verfahren beseitigt und insbesondere durch eine nicht nur punktförmige Messung eine höhere Messgeschwindigkeit ermöglicht.

Gemäß einem ersten Aspekt der Erfindung wird daher vorgeschlagen, die eingangs genannte Messeinrichtung dahingehend weiterzubilden, dass die Messeinrichtung des Weiteren eine zumindest messobjektseitig telezentrische Optik aufweist, die in einem Strahlengang von der Beleuchtungseinrichtung auf das Messobjekt angeordnet ist, wobei die optische Sensoranordnung derart angeordnet ist, dass sie das Beleuchtungsmuster durch zumindest einen Teil der telezentrischen Optik erfasst, und wobei die Mustererzeugungseinrichtung mit dem zumindest einen Mustererzeugungselement derart ausgebildet ist, dass das Beleuchtungsmuster eine orts- und/oder spektralvariante messobjektseitige Schnittweitenverteilung aufweist.

Die gemäß dem ersten Aspekt vorgeschlagene Lösung beleuchtet somit das Messobjekt mit einem lateral, d.h. senkrecht zu einer Ausbreitungsrichtung des Lichts, ausgedehnten Beleuchtungsmuster. Die optische Sensoranordnung ist insbesondere eine flächige zweidimensionale Kamera, die das reflektierte und/oder gestreute Beleuchtungsmuster erfasst. Es folgt dann eine Auswertung der Abbildungsschärfe des Musters, was durch die orts- und/oder spektralvariante Schnittweitenverteilung des Beleuchtungsmusters ermöglicht wird.

Mit anderen Worten weist das Beleuchtungsmuster somit nicht eine dreidimensionale Musterung auf, welche zum einen durch die laterale ortsvariante Intensitätsverteilung bereitgestellt wird. Beispielsweise kann das Beleuchtungsmuster eine Vielzahl konzentrischer Ringe, ein Schachbrettmuster, ein Streifenmuster usw. sein. Das Beleuchtungsmuster weist zum anderen darüber hinaus eine "dritte Dimension" auf. Das heißt, dem Beleuchtungsmuster ist in der dritten Dimension eine weitere Codierung aufgeprägt, die anhand des mittels der optischen Sensoranordnung erfassten Bildes herausgelesen werden kann. Dies ist die orts- und/oder spektralvariante Schnittweitenverteilung. Eine ortsvariante Schnittweitenverteilung bedeutet hier, dass der Fokalpunkt für jeden lateralen Ort des Beleuchtungsmusters variieren kann. Beispielsweise können verschiedene Ringe oder verschiedene Kästen eines Schachbrettmusters verschiedene Fokustiefen aufweisen. Je nachdem, welche Bereiche des Beleuchtungsmusters schließlich scharf abgebildet werden, kann auch die Lage der scharf abgebildeten Punkte rückgeschlossen und darüber hinaus eventuell sogar aus einem Maß der Unschärfe auf die Lage der zwischen scharf abgebildeten Punkten befindlichen Punkte rückgeschlossen werden.

Gleichzeitig kann auch für jeden Ort des Beleuchtungsmusters eine spektralvariante Schnittweitenverteilung vorliegen. Im Grunde wird dabei für jeden Punkt des Musters eine chromatische Längsaberration herbeigeführt. Es kann somit, wie bei beispielsweise einem konfokalen chromatischen Sensor, für jeden Punkt des Beleuchtungsmusters eine chromatische Intensitätsverteüung analysiert und die Lage des Punktes erfasst werden.

Eine "Spektraivarianz" beschreibt somit eine Wellenlängenabhängigkeit. Eine "Ortsvarianz" beschreibt somit eine Abhängigkeit von einem lateralen Ort.

Die Vorrichtung gemäß dem zweiten Aspekt weist die Messeinrichtung gemäß dem ersten Aspekt der Erfindung oder einer seiner Ausgestaltungen auf und darüber hinaus eine Auswertungseinheit zum Auswerten eines Mittels der optischen Sensoranordnung und/oder der weiteren optischen Sensoranordnung erfassten Bildes.

Das Verfahren gemäß dem dritten Aspekt der Erfindung weist die Schritte des Beleuchtens des Messobjekts mit einem Beleuchtungsmuster mit ortsvarianter Intensitätsverteilung mittels einer Beleuchtungseinrichtung, wobei das Beleuchtungsmuster des Weiteren eine orts- und/oder spektralvariante messobjektseitige Schnittweitenverteilung aufweist, des Erfassens des von dem Messobjekt reflektierten und/oder gestreuten Beleuchtungsmusters mittels einer optischen Sensoranordnung, wobei die optische Sensoranordnung derart ausgebildet ist, dass sie das Beleuchtungsmuster durch zumindest einen Teil einer zumindest messobjektseitig telezentrischen Optik erfasst, die in einem Strahlengang von der Beleuchtungseinrichtung auf das Messobjekt angeordnet ist, und des Auswertens einer Bildschärfe und/oder einer Spektralverteilung über dem gesamten erfassten Beleuchtungsmuster auf.

Die zumindest objektseitige Telezentrie der Optik bewirkt darüber hinaus, dass ein Abbildungsmaßstab des Messobjekts unabhängig von seiner relativen Lage zu der Messeinrichtung ist. Veränderte Vergrößerungsverhältnisse müssen somit bei der Auswertung nicht berücksichtigt werden, was die Auswertung vereinfacht und das Messen somit zusätzlich beschleunigt bzw. die metrologische Genauigkeit verbessert.

Die "Schnittweite" bezeichnet dabei den Abstand des Schnittpunkts der durch einen bestimmten Punkt des Beleuchtungsmusters verlaufenden Lichtstrahlen von einer Oberfläche des am weitesten messobjektseitig gelegenen optischen Elements der Messeinrichtung.

Die Vorrichtung gemäß dem zweiten Aspekt der Erfindung und das Verfahren gemäß dem dritten Aspekt der Erfindung weisen somit dieselben Vorteile wie die Messeinrichtung gemäß dem ersten Aspekt der Erfindung auf. Die eingangs gestellte Aufgabe wird daher vollkommen gelöst.

In einer Ausgestaltung der Messeinrichtung kann vorgesehen sein, dass die optische Sensoranordnung eine Kamera, d.h. ein flächig oder zweidimensional messender Sensor ist, und wobei die Mustererzeugungseinrichtung mit dem zumindest einen Mustererzeugungselement derart ausgebildet ist, dass das Beleuchtungsmuster eine ortsvariante messobjektseitige Schnittweitenverteilung aufweist.

Auf diese Weise wird es somit möglich, einen großen Oberflächenbereich mit einer einzigen Aufnahme zu vermessen.

In einer weiteren Ausgestaltung der Messeinrichtung kann vorgesehen sein, dass die optische Sensoranordnung ein Spektrometer oder ein spektral auflösender zweidimensionaler Sensor ist, und wobei die Mustererzeugungseinrichtung mit dem zumindest einen Mustererzeugungselement derart ausgebildet ist, dass das Beleuchtungsmuster eine spektralvariante messobjektseitige Schnittweitenverteilung aufweist.

Auch bei dieser Ausgestaltung kann durch eine einzige Aufnahme eine flächige Erfassung eines großen Oberflächenbereichs des zu vermessenden Messobjekts getätigt werden. Das Spektrometer kann dabei insbesondere ein Multizeilenspektrometer sein, wie im Folgenden noch erläutert wird. Auch kann es sich bei dem Sensor um eine Kamera handeln, insbesondere eine Digital-Kamera, die für jeden Bildpunkt eine spektrale Auflösung erfasst. Auf diese Weise wird auch bei der Ausgestaltung mit einer spektralvarianten Schnittweitenverteilung eine vollflächige Erfassung eines großen Oberflächenbereichs möglich.

In einer weiteren Ausgestaltung der Messeinrichtung kann vorgesehen sein, dass ein Mustererzeugungselement der Mustererzeugungseinrichtung eine Transmissionsstruktur ist, die sich zumindest teilweise schräg zu dem Strahlengang der Strahlung erstreckt.

Die Transmissionsstruktur ist somit in dem Beleuchtungsstrahlengang angeordnet. Die Transmissionsstruktur erzeugt die ortsvariante Intensitätsverteilung und somit das Beleuchtungsmuster. Das Beleuchtungsmuster wird somit mittels der Durchstrahlung einer Transmissionsstruktur auf das Messobjekt projiziert. Erstreckt sich die Transmissionsstruktur zumindest teilweise schräg zu dem Strahlengang von der Beleuchtungseinrichtung auf das Messobjekt, ergibt sich für die Fokuslage ebenfalls eine Ortsvarianz. Somit können sich unterschiedliche Fokuslagen für verschiedene Punkte der Transmissionsstruktur ergeben. Wie im Folgenden noch erläutert wird, kann beispielsweise eine Vielzahl konzentrischer Ringe vorgesehen sein, wobei jeder Ring eine unterschiedliche Fokuslage aufweist. Abhängig von der Lage der Oberfläche wird somit nur ein bestimmter Ring oder ein Teil eines oder mehrerer Ringe scharf abgebildet. Ein solches Beleuchtungsmuster kann beispielsweise mittels eines Kegels als Transmissionsstruktur erzielt werden.

Eine Ausbreitungsrichtung des "Strahlengangs" entnimmt der Durchschnittsfachmann dem optischen Aufbau der Anordnung. Weist die Optik refraktive optische Elemente auf, so verläuft die Ausbreitungsrichtung des Strahlengangs parallel zu der optischen Achse der refraktiven Elemente.

In einer weiteren Ausgestaltung der Messeinrichtung kann vorgesehen sein, dass ein erstes Mustererzeugungselement der Mustererzeugungseinrichtung eine ebene Transmissionsstruktur ist, die sich senkrecht zu dem Strahlengang erstreckt, und wobei ein zweites Mustererzeugungselement der Mustererzeugungseinrichtung ein refraktives optisches Element mit einer chromatischen Längsaberration oder ein optisches Element mit einer sphärischen Aberration ist.

Mit einer sich senkrecht zu dem Strahlengang erstreckenden Transmissionsstruktur kann ebenfalls das Beleuchtungsmuster erzeugt werden. Ein refraktives optisches Element mit einer chromatischen Längsaberration kann darüber hinaus für das gesamte Beleuchtungsmuster eine spektralvariante Schnittweite herbeiführen. Auch mittels eines optischen Elements mit einer sphärischen Aberration kann das vorgeschlagene Messprinzip umgesetzt werden. Die sphärische Aberration erzeugt ebenfalls eine Streckung des Fokusbereichs in Tiefenrichtung. Zwar erfolgt dann jeweils eine vollständig scharfe Abbildung auf der optischen Sensoranordnung, jedoch kann nach entsprechender Kalibrierung derjenige Ort in Tiefenrichtung parallel zum Strahlengang gefunden werden, bei dem die Intensität des reflektierten und/oder gestreuten Lichts maximal ist.

In einer weiteren Ausgestaltung der Messeinrichtung kann vorgesehen sein, dass die Messeinrichtung des Weiteren einen ersten Strahlteiler in der Optik aufweist, der den Strahlengang in einen ersten Messstrahlengang und in einen zweiten Messstrahlengang teilt, wobei der erste Messstrahlengang und der zweite Messstrahlengang senkrecht zueinander ausgerichtet sind.

Auf diese Weise wird, wie im Folgenden noch erläutert wird, beispielsweise eine gleichzeitige Messung in zwei Richtungen ermöglicht. Beispielsweise kann auf diese Weise die Tiefe einer Bohrung bestimmt werden und gleichzeitig ein Abstand zu einem Rand der Bohrung erfasst werden.

In einer Ausgestaltung der Messeinrichtung kann vorgesehen sein, dass der erste Strahlteiler ein dichroitischer Strahlteiler ist.

Auf diese Weise kann beispielsweise der erste Messstrahlengang mit einem ersten Wellenlängenbereich und der zweite Messstrahlengang mit einem zweiten Wellenlängenbereich betrieben werden. Auf diese Weise kann letztlich bei einer Auswertung eine wellenlängenabhängige Zuordnung zu dem ersten Messstrahlengang und dem zweiten Messstrahlengang erfolgen. Durch weitere dichroitische Aufspaltungen des Strahlengangs können auch noch weitere simultan betreibbare Messstrahlengänge bereitgestellt werden.

In einer weiteren Ausgestaltung der Messeinrichtung kann vorgesehen sein, dass der erste Strahlteiler ein polarisationsoptischer Strahlteiler ist.

Auf diese Weise kann mittels zwei verschiedener Polarisationen eine Zuordnung zu dem ersten und dem zweiten Messstrahlengang erfolgen, was eine eindeutige Auswertung ermöglicht.

In einer weiteren Ausgestaltung der Messeinrichtung kann vorgesehen sein, dass das zweite Mustererzeugungselement der Mustererzeugungseinrichtung ein refraktives optisches Element mit einer chromatischen Längsaberration ist, wobei die Optik derart ausgebildet ist, dass ein Zwischenbild in der Optik erzeugt ist, und wobei ein chromatischer Verlaufsfilter in einer Ebene des Zwischenbilds angeordnet ist.

Auf diese Weise kann eine chromatische Auswertung erfolgen. Insbesondere kann eine solche Auswertung mittels eines Spektrometers erfolgen, es ist somit keine Kamera notwendig, die für jeden Bildpunkt eine spektrale Auswertung durchführt. Dieses kann eine günstigere optische Sensoranordnung ermöglichen, was die Bereitstellung einer insgesamt günstigeren Messeinrichtung ermöglicht.

In einer weiteren Ausgestaltung der Messeinrichtung kann vorgesehen sein, dass das von der Mustererzeugungseinrichtung erzeugte Beleuchtungsmuster ein rasterförmiges Punktmuster ist, wobei zwischen der Optik und der optischen Sensoranordnung eine Lochmusteranordnung angeordnet ist, wobei jedes Loch der Lochmusteranordnung mittels eines Lichtleiters mit der optischen Sensoranordnung verbunden ist.

Insbesondere kann dabei vorgesehen sein, dass die optische Sensoranordnung ein Multizeilenspektrometer ist.

Auch diese Ausgestaltung ermöglicht eine chromatische Auswertung ohne die Verwendung einer relativ kostenintensiven Kamera mit spektraler Analyse für jeden Bildpunkt. Jedes Loch der Lochmusteranordnung bzw. eines sog. "Pinhole-Arrays", kann mittels eines Lichtleiters einer Zeile eines Multizeilenspektrometers zugeordnet werden. Auf diese Weise kann jeder Punkt des Pinhole-Arrays einzeln ausgewertet werden.

In einer weiteren Ausgestaltung der Messeinrichtung kann vorgesehen sein, dass ein Gehäuse mit einem sich länglich erstreckenden Gehäuseabschnitt vorgesehen ist, wobei die Optik eine Relaisoptik in dem sich länglich erstreckenden Gehäuseabschnitt aufweist, und wobei der Strahlengang von der Beleuchtungseinrichtung auf das Messobjekt und ein Erfassungsstrahlengang von dem Messobjekt auf die optische Sensoranordnung durch die Relaisoptik parallel zueinander verlaufen.

Auf diese Weise wird ebenfalls die Möglichkeit bereitgestellt, mit parallelen und koaxial verlaufenden Beleuchtungs- und Beobachtungsstrahlengängen zu arbeiten. Insbesondere ermöglicht dies eine Untersuchung von Bohrungen oder in räumlich sehr engen bzw. zurückgesetzten Umgebungen liegenden Oberflächen.

In einer weiteren Ausgestaltung der Messeinrichtung kann vorgesehen sein, dass die Messeinrichtung des Weiteren eine weitere Beleuchtungseinrichtung zum Beleuchten des Messobjekts mit einem weiteren Beleuchtungsmuster, eine weitere Mustererzeugungseinrichtung mit zumindest einem Mustererzeugungselement zum Herbeiführen einer ortsvarianten Intensitätsverteilung des weiteren Beleuchtungsmusters, eine weitere zumindest messobjektseitig telezentrische Optik, die in einem weiteren Strahlengang von der weiteren Beleuchtungseinrichtung auf das Messobjekt angeordnet ist, und eine weitere optische Sensoranordnung zum Erfassen des von dem Messobjekt reflektierten und/oder gestreuten Beleuchtungsmusters aufweist, wobei die weitere optische Sensoranordnung derart angeordnet ist, dass sie das Beleuchtungsmuster durch zumindest einen Teil der weiteren telezentrischen Optik erfasst, und wobei die weitere Mustererzeugungseinrichtung mit dem zumindest einen Mustererzeugungselement derart ausgebildet ist, dass das weitere Beleuchtungsmuster eine orts- und/oder spektralvariante messobjektseitige Schnittweitenverteilung aufweist, und wobei die weitere Optik zumindest ein Strahlumlenkungselement zum Aufweiten des weiteren Strahlengangs über zumindest einen Umfangsbogenabschnitt senkrecht zu dem Strahlengang auf das Messobjekt aufweist.

Auf diese Weise wird somit ein weiterer unabhängiger, aber gleich wirkender Sensoraufbau zusätzlich bereitgestellt. Ein von diesem Sensoraufbau verändertes Beleuchtungsmuster kann von dem Beleuchtungsmuster des anderen Sensoraufbaus verschieden sein, es kann aber auch ein gleiches Beleuchtungsmuster sein.

Auch auf diese Weise wird so ermöglicht, dass in zwei senkrecht aufeinander stehenden Richtungen vermessen werden kann, beispielsweise eine Vermessung in Tiefenrichtung einer Bohrung und eine Messung senkrecht dazu, die einen Abstand zu einem Bohrungsrand kontrolliert. Aufgrund der Strahlumlenkung über einen Anfangsbogenabschnitt oder eventuell sogar über den gesamten Umfang ist es jedoch nicht notwendig, die Messeinrichtung während des Messens zu drehen. Vielmehr wird ein großer Umfangsbogenabschnitt gleichzeitig vermessen. Insbesondere kann der Umfangsbogenabschnitt 180° betragen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine schematische Darstellung einer Messeinrichtung gemäß einem ersten Aspekt der Erfindung;
- Fig. 2: eine schematische Darstellung einer weiteren Ausführungsform einer Messeinrichtung;
- Fig. 3: eine beispielhafte Darstellung eines Beleuchtungsmusters;
- Fig. 4a: eine schematische Darstellung zur Erläuterung der unterschiedlichen Schnittweiten bei einer schräg angeordneten Transmissionsstruktur und daraus resultierender ortsvarianter Schnittweitenverteilung;
- Fig. 4b: eine schematische Darstellung zur Erläuterung einer spektralvarianten Schnittweitenverteilung;
- Fig. 5: eine weitere Ausführungsform einer Messeinrichtung;
- Fig. 6: noch eine weitere Ausführungsform einer Messeinrichtung;
- Fig. 7: noch eine weitere Ausführungsform einer Messeinrichtung;
- Fig. 8: noch eine weitere Ausführungsform einer Messeinrichtung;
- Fig. 9: eine schematische Darstellung einer Ausführungsform einer Vorrichtung;
- Fig. 10: ein weiteres Beispiel für ein mögliches Beleuchtungsmuster; und
- Fig. 11: ein schematisches Ablaufdiagramm eines Verfahrens.

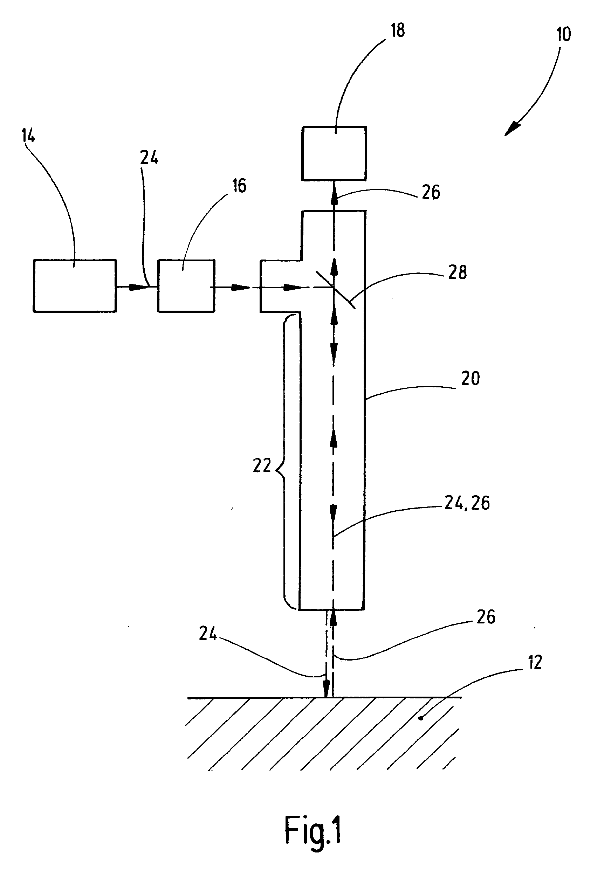

Fig. 1 zeigt eine schematische Darstellung einer Messeinrichtung 10, Die Messeinrichtung 10 dient zum Vermessen eines Messobjekts 12.

Dazu weist die Messeinrichtung 10 eine Beleuchtungseinrichtung 14 und eine Mustererzeugungseinrichtung 16 auf. Mittels der Beleuchtungseinrichtung 14 und der Mustererzeugungseinrichtung 16 wird ein Beleuchtungsmuster auf das Messobjekt 12 gestrahlt, wobei das von dem Messobjekt 12 reflektierte und/oder gestreute Licht mittels einer optischen Sensoranordnung 18 erfasst wird.

Die Messeinrichtung 10 kann ein Gehäuse 20 aufweisen, das einen sich länglich erstreckenden Gehäuseabschnitt 22 aufweist, der beispielsweise in einen ansonsten räumlichen schwer zugänglichen Bereich, beispielsweise eine Bohrung, geschoben werden kann. Grundsätzlich ist die räumlich-körperliche Ausgestaltung der Messeinrichtung 10 jedoch beliebig.

Von der Beleuchtungseinrichtung 14 auf das Messobjekt 12 verläuft ein Strahlengang 24. Das von dem Messobjekt 12 reflektierte und/oder gestreute Licht, das mittels der optischen Sensoranordnung 18 erfasst wird, ist durch einen mit 26 bezeichneten Strahlungsgang dargestellt. Es liegt ein Beleuchtungsstrahlengang 24 und ein Erfassungsstrahlengang 26 vor. Insbesondere in dem länglichen Gehäuseabschnitt 22 verlaufen diese parallel und koaxial zueinander. Die teilweise getrennte Darstellung von Beleuchtungsstrahlengang 24 und Erfassungsstrahlengang 26 ist lediglich zu Darstellungszwecken vorgenommen.

Mittels der Beleuchtungseinrichtung 14 wird ein Flächenbereich des Messobjekts 12 beleuchtet. Mittels der optischen Sensoranordnung 18 wird das von diesem Flächenbereich reflektierte und/oder gestreute Licht erfasst. Der Beleuchtungsstrahlengang 24 und der Erfassungsstrahlengang 26 werden daher mittels eines Strahlteilers 28 voneinander getrennt. Die Anordnung von Beleuchtungseinrichtung 14 und optischer Sensoranordnung 18 ist lediglich beispielhaft zu verstehen. Diese können grundsätzlich auch getauscht sein.

Die Mustererzeugungseinrichtung 16 ist dabei derart ausgebildet, dass ein von der Beleuchtungseinrichtung 14 auf das Messobjekt 12 aufgestrahltes Beleuchtungsmuster eine orts- und/oder spektralvariante Schnittweitenverteilung aufweist. Diese wird im Folgenden noch näher erläutert. Das von der optischen Sensoranordnung 18 erfasste Bild kann daher auf eine spektral- und/oder ortsabhängige Bildschärfe untersucht werden, woraus auf eine Lage eines entsprechend erfassten Punktes auf dem Messobjekt relativ zu der Messeinrichtung 10 rückgeschlossen werden kann.

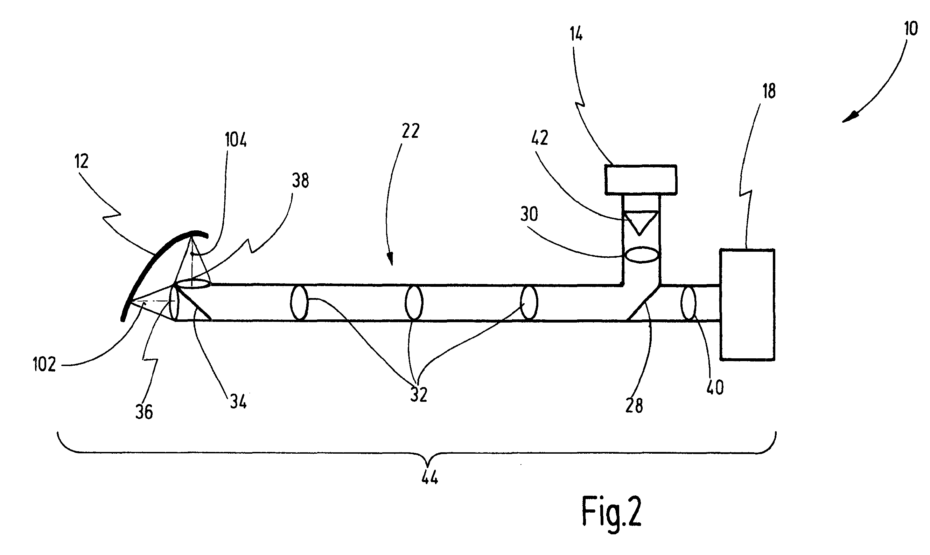

Fig. 2 zeigt eine schematisch dargestellte Ausführungsform der Messeinrichtung 10. Gleiche Elemente sind darin mit gleichen Bezugszeichen gekennzeichnet und werden im Folgenden nicht erneut erläutert.

Schematisch dargestellt sind ein Beleuchtungsoptikelement 30 sowie eine aus mehreren optischen Elementen bestehende Relaisoptik 32. Die Relaisoptik 32 erstreckt sich dabei in dem länglichen Gehäuseabschnitt 22. In einen dem Messobjekt 12 zugewandten Ende des länglichen Gehäuseabschnitts 22 ist ein weiterer Strahlteiler 34 vorgesehen, der den Beleuchtungsstrahlengang 24 in einen ersten Messstrahlengang 102 in Längsrichtung und einen zweiten Messstrahlengang 104 in Querrichtung aufteilt. Auf diese Weise können zwei Flächenbereiche des Messobjekts 12 vermessen werden. Der von dem Messobjekt 12 gestreute und/oder reflektierte Strahlengang verläuft durch den Strahlteiler 34 und den Strahlteiler 28 und wird von einem Abbildungsoptikelement 40 auf die optische Sensoranordnung 18 abgebildet. Des Weiteren ist in dem Beleuchtungsstrahlengang eine Transmissionsstruktur 42 vorgesehen. In der dargestellten Ausführungsform ist die Transmissionsstruktur 42 ein kegelförmiges Gitter. Mittels des Gitters wird eine ortsvariante Intensitätsverteilung erreicht. Mit anderen Worten gibt es laterale Bereiche, durch die das Licht der Beleuchtungseinrichtung 14 hindurchtreten kann, und Bereiche, in denen es blockiert wird. Des Weiteren liegen die Bereiche, in denen das Licht durch die Transmissionsstruktur 42 hindurchtritt, in unterschiedlicher Tiefe auf dem Beleuchtungsstrahlengang 24.

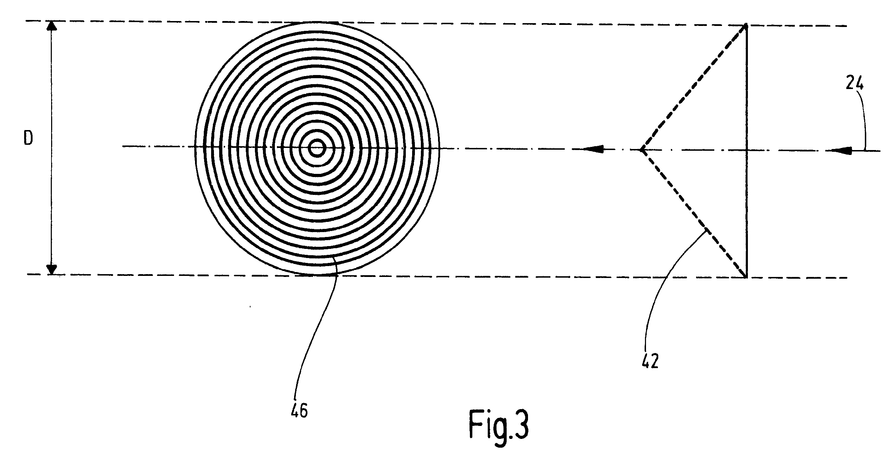

Schematisch ist dies in der Fig. 3 dargestellt. Auf diese Weise ergibt sich als Beleuchtungsmuster 46 eine Vielzahl von konzentrischen Ringen. Der Ring mit dem größten Durchmesser hat den Durchmesser D. Jeder Ring weist dabei in Beleuchtungsrichtung eine unterschiedliche Tiefenlage in der Transmissionsstruktur 42 auf. Folglich ist die Fokuslage jedes Rings bei der Projektion auch eine andere.

Der erste Messstrahlengang 102 und der zweite Messstrahlengang 104 können in einem rechten Winkel aufeinander stehen. Es ist grundsätzlich aber auch jeder andere Winkel zwischen dem ersten Messstrahlengang 102 und dem zweiten Messstrahlengang 104 möglich. Bei dem Strahlteiler 34 kann es sich um ein dichroitisches Element handeln. Die Strahlteilung erfolgt dann über unterschiedliche Wellenlängenbereiche. Es kann sich jedoch auch um einen Polarisationsstrahlteiler handeln. Die Strahlteilung erfolgt dann über unterschiedliche Polarisationen. Die Relaisoptik 32 kann beispielsweise über mehrere Feldlinsen ausgeführt sein. Die Relaisoptik 32 kann jedoch auch ein oder mehrere GRIN (Gradientenindex)-Linsen aufweisen. Auch kann die Relaisoptik 32 über ein bilderhaltendes Lichtleitfaserbündel erfolgen. Auch eine Kombination ein oder mehrerer dieser Ausgestaltungen ist denkbar.

Die in der Fig. 2 dargestellte Anordnung von Beleuchtungseinrichtung 14 und optischer Sensoranordnung 18 kann grundsätzlich auch vertauscht sein. Darüber hinaus können noch weitere dichroitische Strahlteiler vorgesehen sein. Über eine Kaskadierung mehrerer dichroitischer Strahlteiler können noch weitere Messstrahlengänge zusätzlich zu den Messstrahlengängen 102 und 104 vorgesehen werden. Durch Verwendung einer spektral schaltbaren Strahlungsquelle 14 kann der Messstrahlengang dann selektiert werden. Eine spektral schaltbare Strahlungsquelle 14 kann beispielsweise mittels mehrerer einzeln schaltbarer LEDs unterschiedlicher Schwerpunktwellenlänge oder Gruppen von LEDs gleicher Schwerpunktwellenlänge ausgebildet sein.

Als Transmissionsstruktur dient die in Fig. 3 dargestellte Gitterkegelanordnung. Auf der konisch geformten Oberfläche der Transmissionsstruktur 42 befindet sich eine Strukturierung, die teilweise transparent und teilweise opak ist. Die Strukturierung kann beispielsweise konzentrische Ringen wie in der Fig. 3 dargestellt aufweisen. Es ist prinzipiell aber auch jede andere Art von Strukturierung verwendbar, insbesondere ein schachbrett-, waben- oder gitterartiges Muster. Es sind auch Lochstrukturen, Streifen oder stochastische Muster denkbar. Insbesondere können auch periodische Strukturen mit unterschiedlichen Ortsfrequenzen verwendet werden. Die Transmissionsstruktur kann auch segmentartig unterteilt sein, wobei jedes Segment eine andere Strukturierung aufweisen kann. Des Weiteren ist es auch möglich, nur einen Teil des zur Verfügung stehenden Querschnitts mit der Strukturierung zur Herbeiführung des Beleuchtungsmusters 46 zu versehen. Von der Beleuchtungseinrichtung 14 wird die Transmissionsstruktur 42 als Beleuchtungsmuster 46 über das Beleuchtungsoptikelement 30, den Strahlteiler 28, die Relaisoptik 32 und das Frontoptikelement 36 oder das Queroptikelement 38 auf das Messobjekt 12 projiziert. Aufgrund der konischen Form der Transmissionsstruktur 42 werden nur bestimmte Teile der Transmissionsstruktur 42 scharf auf die Oberfläche des Messobjekts 12 projiziert. Die von der Oberfläche reflektierte und/oder gestreute projizierte Strahlung wird über das Frontoptikelement 36 oder das Queroptikelement 38 sowie die Relaisoptik 32, den Strahlteiler 28 und das Abbildungsoptikelement 40 auf die optische Sensoranordnung 18 abgebildet. Die optische Sensoranordnung 18 in der Fig. 2 kann als Digital-Kamera ausgebildet sein. Der flächige bzw. der zweidimensionale erstreckende Sensorchip der Kamera liegt hier senkrecht zu einer optischen Achse des Abbildungsoptikelements 40.

Wird beispielhaft das in der Fig. 3 dargestellte Beleuchtungsmuster 46 angenommen, das aus konzentrischen Ringen besteht und des Weiteren beispielhaft vorausgesetzt, dass die zu vermessende Oberfläche des Messobjekts 12 eben ist und beispielsweise senkrecht auf der optischen Achse des Frontoptikelements 36 steht, werden in diesem Fall von der optischen Sensoranordnung 18 nur wenige Ringe oder in einem Extremfall nur ein Ring scharf abgebildet. Da jedem Ring ein definierter Abstand zu beispielsweise dem Frontoptikelement 36 zugeordnet werden kann, kann - eine entsprechende Entfernungskalibrierung vorausgesetzt - ein optischer Abstand der Oberfläche des Messobjekts erfasst werden. Es steht somit ein optischer Abstandsensor zur Verfügung. Liegt die Oberfläche des Messobjekts 12 nicht senkrecht zu der optischen Achse des Frontoptikelements 36 oder ist dieses verkippt, werden aus den scharf abgebildeten Ringen Ellipsen. Ihre Lage, d.h. die Lage der beiden Achsen der Ellipse, und ihre Form, d.h. die Exzentrizität der Ellipse, gibt Aufschluss über die Richtung und den Verkippungswinkel der Oberfläche des Messobjekts. Bei beliebig verkippten bzw. verformten Oberflächen des Messobjekts 12 erhält man entsprechend komplexere ringartige, aber unter Umständen nicht mehr runde oder elliptische Strukturen über dem Erfassungsbereich der optischen Sensoranordnung 18. Das mittels der optischen Sensoranordnung 18 erfasste Bild ist dann nur noch an bestimmten Stellen scharf. In diesem Fall ist eine Bildauswertung von Lage, Form und Schärfe der reflektierten und/oder gestreuten Ringstrukturen durchzuführen, um die Oberflächentopologie zu ermitteln.

In jedem Fall erhält man aber nicht nur eine Auswertung mit Informationen von einem Punkt auf der Oberfläche des Messobjekts. Die dargestellte Messeinrichtung ist dazu in der Lage, mit einer Kameraaufnahme eine topologische Information über einen Flächenbereich zu ermitteln, der der Projektionsfläche entspricht. Aufgrund der zumindest objektseitigen Telezentrie einer Optik 44 muss darüber hinaus keinerlei Veränderung der Vergrößerung bzw. des Abbildungsmaßstabs berücksichtigt werden. Für die Beleuchtung des Messobjekts 12 bilden das Beleuchtungsoptikelement 30, der Strahlteiler 28, die Relaisoptik 32 und das Frontoptikelement 36 oder das Queroptikelement 38 die Optik des Beleuchtungsstrahlengangs 24. Für den "Rückweg" sind dies dieselben Elemente außer dem Beleuchtungsoptikelement 30, das durch das Abbildungsoptikelement 40 ersetzt ist.

Gegenüber einem reinen Punktsensor erhält man so den Vorteil, dass weitaus weniger Orte der zu vermessenden Oberfläche des Messobjekts 12 angefahren werden müssen, wodurch der gesamte Messvorgang deutlich schneller erfolgen kann. Darüber hinaus wird der Vorteil bereitgestellt, dass mit einer einzigen Messung, d.h. einem einzigen Bild bereits die Lage der Messeinrichtung relativ zu der Oberfläche des Messobjekts 12 erfasst werden kann. Es kann vorausberechnet werden, wie bei einer zu vermessenden Fläche, die größer als die Projektionsfläche ist, der nächste Messort vorteilhaft zu wählen ist. Ein Vorteil der größeren Geschwindigkeit kommt insbesondere dann zum Tragen, wenn vorab nur sehr wenige metrische Informationen über das Messobjekt 12 vorliegen.

Ein zweiter Messstrahlengang 104 über das Queroptikelement 38 kann dazu genutzt werden, simultan oder sequentiell topologische Informationen unter einem anderen Winkel zu messen. Um die Messstrahlengänge 102 und 104 von Längs- und Quersensor eindeutig zuordnen zu können, wird die Strahlung an dem Strahlteiler 34 spektral oder polarisationsoptisch aufgeteilt. Dabei muss dann zusätzlich auf der Sensorseite, d.h. in der optischen Sensoranordnung 18, eine entsprechende Zuordnung beispielsweise durch Selektion erfolgen. Bei einer spektralen Trennung, d.h. einer Ausbildung des Strahlteilers 34 als dichroitischem Strahlteiler kann beispielsweise die Strahlungsquelle der Beleuchtungseinrichtung 14 eine blaue LED oder ein mit einer ersten Wellenlänge versehenes monochromatisches Licht für einen Längssensor, d.h. den Strahlengang 102 durch das Frontoptikelement 36, vorgesehen sein. Für den Quersensor, d.h. den zweiten Messstrahlengang 104 durch das Queroptikelement 38, kann beispielsweise eine grüne LED oder eine monochromatische Lichtquelle mit zweiter Wellenlänge vorgesehen sein. Wenn der Strahlteiler 34 dann als dichroitischer Strahlteiler mit einer Teilungs- oder Phasenkante zwischen der ersten Wellenlänge und der zweiten Wellenlänge, beispielsweise zwischen Blau und Grün, ausgelegt ist, kann die Umschaltung zwischen der Verwendung des Längssensors und der Quersensors durch Umschalten der Beleuchtung mittels der Beleuchtungseinrichtung 14 zwischen Blau und Grün, bzw. zwischen der ersten und der zweiten Wellenlänge, erfolgen. In diesem Fall ist sogar eine Monochromkamera in der optischen Sensoranordnung 18 geeignet. Für eine simultane Messung sowohl mittels des Längs- als auch des Quersensors wäre dann eine Farbkamera vorteilhaft, wobei die Farbkamera auch eine Mehrchip-Kamera sein kann. Natürlich können neben LED's (light-emitting diodes) auch sonstige Strahlungsquellen mit beliebigen anderen ersten und zweiten Wellenlängen als Schwerpunktwellenlängen verwendet werden.

Bei einer polarisationsoptischen Trennung spaltet der Strahlteiler 34 die Beleuchtungsstrahlung der Beleuchtungseinrichtung 14 beispielsweise in s- und p-polarisiertes Licht auf. Auf der Detektionsseite in der optischen Sensoranordnung 18 werden dann ebenfalls polarisationsempfindliche Trennoptiken vorgesehen (in der Fig. 2 nicht dargestellt), um die Zuordnung zu Längs- und Quersensor zu bewerkstelligen. Um bewegliche Elemente zu vermeiden, kann vorgesehen sein, dass die optische Sensoranordnung 18 eine erste flächige Kamera und eine zweite flächige Kamera aufweist, auf die jeweils das s- und p-polarisierte Licht geleitet wird. Alternativ kann auch die sensitive Fläche, d.h. die Sensorfläche einer einzigen zweidimensionalen bzw. flächigen Kamera wie bei den Sensoren aufgeteilt werden. Grundsätzlich ist es möglich, neben den zwei schematisch angedeuteten Längs- und Quersensoren durch weitere Strahlteiler auch noch weitere Quersensoren und weitere Messstrahlengänge mit anderen Blickrichtungen zu ergänzen.

In Fig. 3 ist die Transmissionsstruktur 42 im Detail gezeigt. Die in der Fig. 3 dargestellte Transmissionsstruktur 42 ist als Gitterkegel ausgebildet. Der Kegel kann beispielsweise vollständig mit Glas ausgefüllt oder innen hohl sein. Auf der konisch geformten Oberfläche des Kegels ist beispielsweise eine Transmissionsstruktur aus konzentrischen Ringen aufgebracht, die das in der Fig. 3 dargestellte Beleuchtungsmuster 46 ergibt. Die dunkeln Ringe stehen für opake Bereiche, welche beispielsweise durch Aufdampfen von Chrom auf die Oberfläche der Transmissionsstruktur 42 hergestellt werden können. Die Oberfläche der Transmissionsstruktur 42 muss nicht zwingend konisch sein, sie kann auch eine andere nicht-ebene Form aufweisen, z.B. sphärisch oder ellipsoid. Die Wölbung der Oberfläche kann sowohl in Richtung des Beleuchtungsstrahlengangs 24 als auch in die entgegengesetzte Richtung weisen. Es kann auch eine Stufenplatte mit konzentrischen Ringen vorgesehen sein, oder auch andere Strukturtypen. Wenn die Transmissionsstruktur 42 gefüllt ist, kommt es bei der Ablenkung des Beleuchtungsstrahls 24 zu einer Prismenwirkung. Es kann auch eine beidseitig eingebettete Transmissionsstruktur 42 vorgesehen sein, d.h. sowohl der innere Raum des Kegels als auch der komplementäre Außenraum sind vollständig gefüllt, so dass effektiv eine planparallele Platte erzeugt wird. Es kann auch ein Prisma mit einer Trennstelle über den Kegelwinkel des Prismas vorgesehen sein, um unterschiedliche Messgeometrien zu verwirklichen.

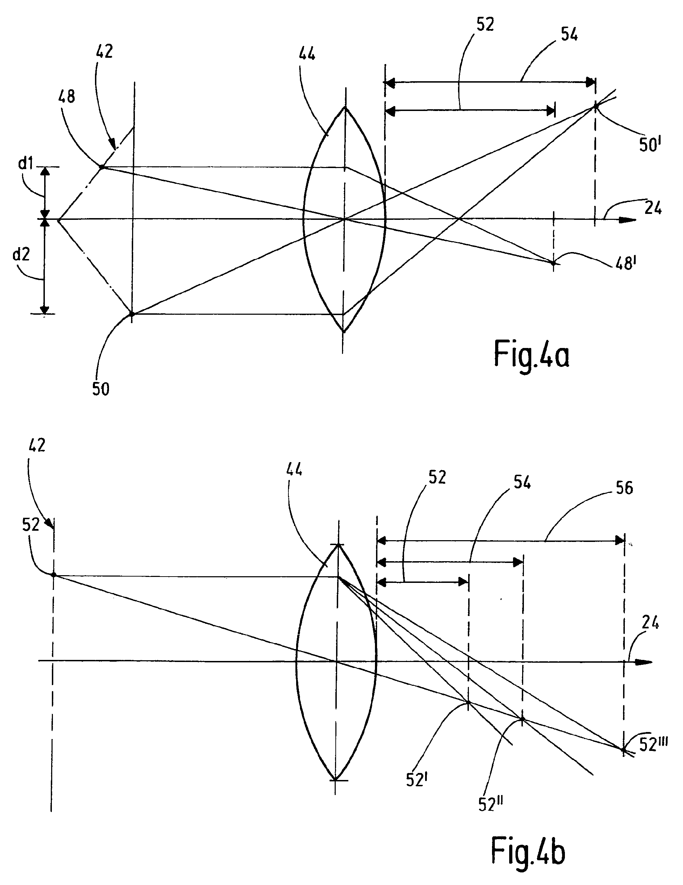

Fig. 4a zeigt beispielhaft eine Darstellung des Effekts der Transmissionsstruktur 42 bei der Beleuchtung eines Messobjekts 12. Dargestellt ist schematisch eine Abbildung eines ersten Punkts 48 und eines zweiten Punkts 50 auf der Transmissionsstruktur 42. Die Abbildung erfolgt durch die Optik 44, die schematisch anhand eines einzigen Elements dargestellt ist. Die Beleuchtungsrichtung des Beleuchtungsstrahlengangs 24 ist schematisch angedeutet. Der erste Punkt 48 weist einen lateralen Abstand d von einer optischen Achse der Optik 44 auf. Daraus ergibt sich ein Ring mit einem Radius d. Entsprechendes gilt für den Punkt 50, der einen lateralen Abstand d2 aufweist, so dass sich ein Ring mit dem Radius d2 ergibt. Die Strahlengänge sind schematisch eingezeichnet. Wie zu erkennen ist, werden die Ringe folglich auch in unterschiedlichen Tiefen entlang des Beleuchtungsstrahlengangs 24 scharf als Punkte 48' bzw. 50' abgebildet. Folglich weist das Muster des ersten Punkts 48 eine erste Schnittweite 52 von der Abbildungsoptik 44 auf. Das Muster des zweiten Punkts 50 weist eine zweite Schnittweite 54 von der Abbildungsoptik 44 auf. Die Schnittweiten 52 und 54 sind unterschiedlich. Je nachdem in welcher Tiefe sich das Messobjekt 12 befindet, wird ein anderer Ring scharf abgebildet. Ist beispielsweise die Oberfläche des Messobjekts 12 genau auf der Höhe des Punkts 48 bzw. weist einen Abstand von der Abbildungsoptik 44 auf, der der Schnittweite 52 entspricht, wird entsprechend der Punkt 48 auch scharf von der Sensoranordnung 18 erfasst bzw. ein entsprechender Ring scharf erfasst, falls ein Beleuchtungsmuster 46 wie in der Fig. 3 verwendet wird.

Entsprechend weist das Beleuchtungsmuster 46, das mittels der Transmissionsstruktur 42 herbeigeführt wird, eine ortsvariante Schnittweitenverteilung auf.

Demgegenüber ist in der Fig. 4b ein Beispiel dargestellt, in dem eine spektralvariante Schnittweitenverteilung vorgesehen ist. Die Transmissionsstruktur 42 ist in diesem Fall senkrecht zu dem Beleuchtungsstrahlengang 24 ausgerichtet. Die Abbildungsoptik 44 weist bewusst einen signifikanten chromatischen Längsfehler auf. Insbesondere kann dieser herbeigeführt werden, indem entsprechend das Frontoptikelement 36 und/oder das Queroptikelement 38 als refraktive optische Elemente mit einem Dispersionsverhalten gewählt werden, das zu einer hohen chromatischen Längsaberration führt. Eine Schnittweite eines abgebildeten Punkts 52 der Transmissionsstruktur 42 ist somit wellenlängenabhängig und führt zu einer wellenlängenabhängigen Verzerrung des Fokuspunkts. In der Fig. 4b ist beispielhaft für drei Wellenlängen die Fokuspunktlage 52', 52" und 52'" dargestellt. Dies führt zu wellenlängenabhängigen Schnittweiten 52, 54 und 56, die voneinander verschieden sind. Über eine wellenlängenabhängige Auswertung, beispielsweise mittels eines Spektrometers oder einer Kamera, bei der jeder Bildpunkt eines Sensorarrays eine spektrale Auswertung ermöglicht, kann so ebenfalls auf eine Tiefenlage einer Oberfläche des Messobjekts 12 geschlossen werden. Weist beispielsweise die Oberfläche des Messobjekts 12 einen Abstand zu der Optik 44 auf, der genau der Schnittweite 54 entspricht, weist das reflektierte und/oder gestreute Licht ein spektrales Intensitätsmaximum bei der entsprechenden dazugehörigen Wellenlänge auf. Über eine Kalibrierung kann somit eine Tiefeninformation für jeden Bildpunkt zum gesamten Projektionsbereich der Transmissionsstruktur 42 gewonnen werden.

Selbstverständlich können beide "Tiefencodierungen" des Beleuchtungsmusters 46 auch kombiniert werden, d.h. es kann sowohl eine Ortsvarianz der Schnittweite 52, 54 als auch eine Spektralvarianz eingefügt sein.

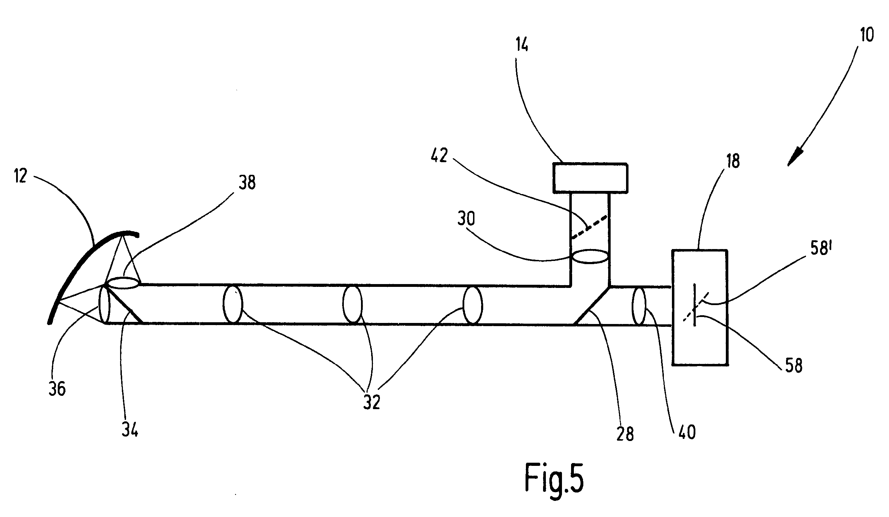

Fig. 5 zeigt eine weitere Ausführungsform der Messeinrichtung 10. Gleiche Elemente sind mit gleichen Bezugszeichen gekennzeichnet und werden im Folgenden nicht erneut erläutert.

Statt eines Kegelgitters als Transmissionsstruktur 42 wird eine planare, d.h. ebene, verkippte, d.h. bezüglich der Ausbreitungsrichtung eines Beleuchtungsstrahlengangs 24 verkippte, Transmissionsstruktur 42 für die Beleuchtung verwendet. Eine Strukturierung dieser Transmissionsstruktur 42 kann beispielsweise aus parallelen Streifen bestehen, es ist prinzipiell aber auch jede andere Art von Strukturierung verwendbar, insbesondere schachbrett-, waben- oder gitterartige Muster, Lochstrukturen und Ringe oder stochastische Muster. Insbesondere können auch periodische Strukturen mit unterschiedlichen Ortsfrequenzen verwendet werden.

Bei dieser Ausführungsform der Messeinrichtung 10 kann ein Sensorarray bzw. Sensorchip 58 sowohl senkrecht zu einer optischen Achse des Abbildungsoptikelements 40 stehen als auch verkippt zu dieser angeordnet sein, wie durch die Lage 58' gekennzeichnet ist. Darüber hinaus entspricht die Funktionsweise dieser Ausführungsform der in der Fig. 3 dargestellten Ausführungsform.

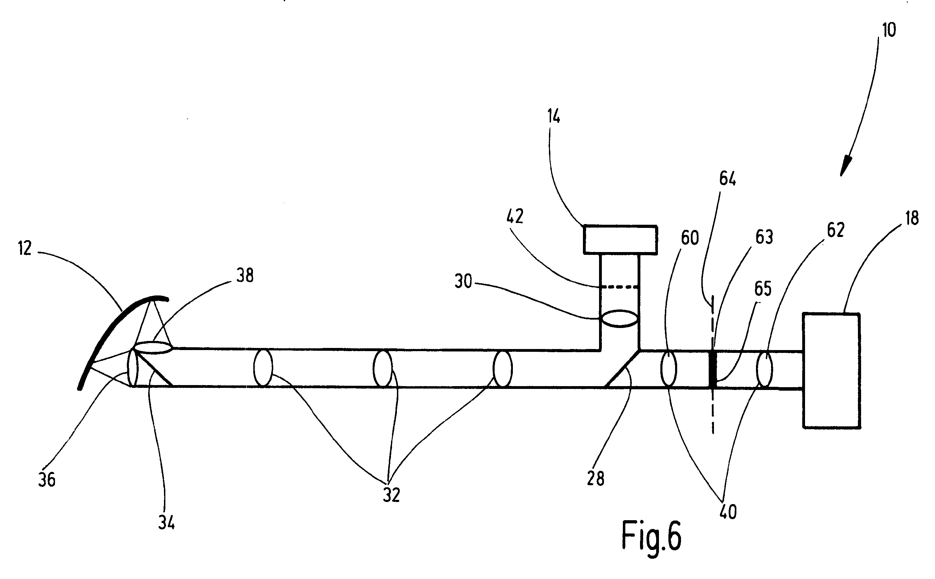

Fig. 6 zeigt auch eine weitere Ausführungsform einer Messeinrichtung 10. Gleiche Elemente sind wiederum mit gleichen Bezugszeichen gekennzeichnet und werden nicht erneut erläutert.

In dieser Ausführungsform ist die Transmissionsstruktur 42 wiederum planar und senkrecht zu einer optischen Achse bzw. Ausbreitungsrichtung des Beleuchtungsstrahlengangs 24 angeordnet. Um auch hier für jeden Ort eines Beleuchtungsmusters 46 eine Abstands- bzw. Tiefeninformation über die Oberfläche des Messobjekts 12 zu erhalten, weisen das Frontoptikelement 36 und das Queroptikelement 38 optische Elemente mit einer großen chromatischen Längsaberration auf. Eine Strahlungsquelle der Beleuchtungseinrichtung 14 ist breitbandig ausgelegt, z.B. in Form von Weißlicht-LED's oder auch multichromatischen Kombinationen von LED's. Alternativ ist es auch möglich, beispielsweise das Frontoptikelement 36 und/oder das Queroptikelement 38 mit anderen Bildfehlern auszugestalten, beispielsweise eine starke Bild- bzw. Objektfeldwölbung (sphärischer Fehler) vorzusehen, um ebene Transmissionsstrukturen 42 verwenden zu können. Um eine Auswertung mittels der optischen Sensoranordnung 18 durchzuführen zu können, weist das Abbildungsoptikelement 40 ein erstes Abbildungselement 60 und ein zweites Abbildungselement 62 auf. Zwischen dem ersten Abbildungselement 60 und dem zweiten Abbildungselement 62 wird ein Zwischenbild 63 in einer Zwischenbildebene 64 erzeugt. In der Zwischenbildebene 64 ist ein chromatischer Verlaufsfilter eingefügt. Der chromatische Verlaufsfilter 65 kann Langpass-, Kurzpass- oder Bandpassfilter-Eigenschaften aufweisen. Liegt beispielsweise ein Langpassverhalten vor, so variiert die Wellenlänge der Filterkante mit dem Auftreffort der Messstrahlung auf den chromatischen Verlaufsfilter 65. Die Wahl des chromatischen Verlaufs hängt von der Struktur des Beleuchtungsmusters 46 ab. Wird beispielsweise eine Struktur von konzentrischen Ringen verwendet, wie in der Fig. 3 dargestellt ist, so weist auch der chromatische Verlaufsfilter einen konzentrischen Verlauf auf. Die Wellenlänge der Filterkante nimmt dann von der Mitte des chromatischen Verlaufsfilters zum Rand hin ab oder zu. Beispielsweise bei einer linear-gitterförmigen Transmissionsstruktur 42 würde die Filterkante von einem Rand des chromatischen Verlaufsfilters 65 zum anderen zu- oder abnehmen. Statt des chromatischen Verlaufsfilters kann auch ein diffraktives optisches Element verwendet werden, um eine vergleichbare Funktion zu erzielen. Alle übrigen Eigenschaften der Ausführungsbeispiele in der Fig. 6 entsprechen im Wesentlichen den Ausführungsbeispielen der Fig. 1. Vorzugsweise ist in der Ausführungsform der Fig. 6 der Strahlteiler 34 jedoch ein polarisationsteilender Strahlteiler, um eine aufwändig übergeordnete spektrale Teilung zu vermeiden.

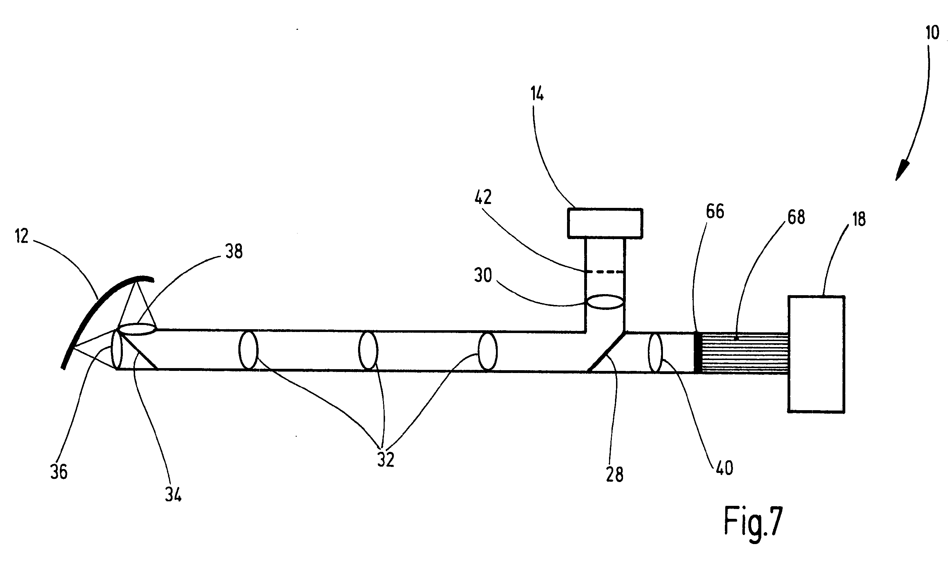

Fig. 7 zeigt noch eine weitere Ausführungsform der Messeinrichtung 10. Hierbei ist die Transmissionsstruktur 42 derart ausgeführt, dass eine rasterförmige Anordnung von Punkten als Beleuchtungsmuster 46 entsteht, wobei eine Lichtquelle der Beleuchtungseinrichtung 14 spektral breitbandig ausgeführt ist. Das Frontoptikelement 36 und das Queroptikelement 38 weisen ebenfalls große chromatische Längsaberrationen auf. In einer konfokalen Ebene des Abbildungssystems auf die optische Sensoranordnung 18 ist eine Lochmusteranordnung bzw. ein Pinhole-Array 66 vorgesehen. Als optische Sensoranordnung 18 ist ein Multizeilenspektrometer vorgesehen. Das Pinhole-Array ist eine Blende mit rasterförmig angeordneten Löchern, wobei die Löcher lateral zu den Beleuchtungspunkten korrespondieren. Es liegt somit quasi eine Multipunktblende vor. Das Multizeilenspektrometer kann beispielsweise dadurch realisiert werden, dass eine flächige Kamera mit Hilfe von Prismen, Gittern oder defraktiven optischen Elementen so bestückt wird, dass jede Zeile der Kamera ein Zeilenspektrometer bildet. Es kann vorgesehen sein, dass jedes Loch des Pinhole-Array 66 mittels eines Lichtleiters 68, beispielsweise eine Glasfaser, optisch mit einer entsprechenden Zeile des Zeilenspektrometers verbunden wird. Auf diese Weise ergibt sich ein parallelisierter chromatischer Konfokalsensor.

Alternativ kann die Transmissionsstruktur 42 in der Fig. 7 auch als Transmissionsspalt ausgelegt sein. In diesem Fall würde in der konfokalen Ebene vor der optischen Sensoranordnung 18 eine konfokale Spaltblende eingefügt. Die konfokale Spaltblende wird dann auf den Eintrittsspalt des Multizeilenspektrometers abgebildet. Dadurch erhält man einen linear paralisierten chromatischen Konfokalsensor, ohne dass Lichtleiter 68 verwendet werden müssen.

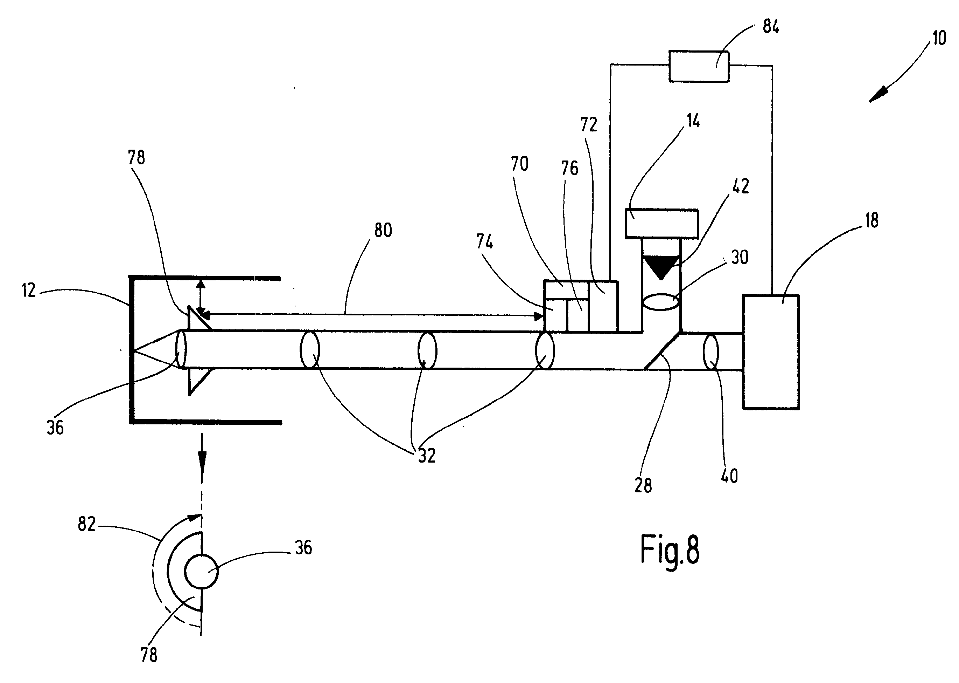

Fig. 8 zeigt noch eine weitere Ausführungsform der Messeinrichtung 10. Gleiche Elemente sind wiederum mit gleichen Bezugszeichen gekennzeichnet und werden nicht erneut erläutert. Die Darstellung in Fig. 8 zeigt eine sog. Hybrid-Sensoreinheit. Der das Frontoptikelement 36 nutzende Aufbau entspricht grundsätzlich dem der voranstehenden Ausführungsbeispiele. Statt eines Queroptikelements 38 ist jedoch eine autarke zusätzliche Sensoreinheit vorhanden. Hierzu sind eine weitere Beleuchtungseinrichtung 70, eine weitere Sensoranordnung 72, eine weitere Optik, insbesondere messobjektseitig, telezentrische Optik 74, und eine weitere Mustererzeugungseinrichtung 76 vorgesehen. Auf diese Weise entsteht ein weiterer Strahlengang 80, entlang dem ein weiteres Beleuchtungsmuster 46 auf das Messobjekt 12 senkrecht zu einem Beleuchtungsstrahlengang 24 oder in einem beliebigen anderen Winkel projiziert werden kann. Hierzu ist zumindest ein Strahlumlenkungselement 78 vorgesehen. Ein Strahlumlenkungselement 78 bewirkt eine Aufweitung des weiteren Strahlengangs 80 zumindest über einen Umfangsbogenabschnitt 82. Grundsätzlich kann der Strahl auf einem kompletten Umfangsbogen aufgeweitet werden. Es ist auch unter Umständen ein Umfangsbogenabschnitt, insbesondere von 180°, ausreichend. Auf diese Weise wird es vermieden, dass die Messeinrichtung 10 gedreht werden muss, um Kollisionen mit der Oberfläche eines Messobjekts 12, beispielsweise eines Bohrlochs, zu vermeiden.

Die optische Sensoranordnung 18 und/oder die weitere optische Sensoranordnung 72 kann mit einer Auswertungseinrichtung 84 zum Auswerten der von der optischen Sensoranordnung 18 und/oder der weiteren optischen Sensoranordnung 72 erfassten Bilder verbunden sein. Die Verbindung kann drahtgebunden, aber auch drahtlos ausgeführt sein.

Insbesondere bei einer Ausgestaltung des Gehäuses 20 mit einem sich länglich erstreckenden Gehäuseabschnitt 22 kann der weitere Strahlengang 80 außerhalb des sich länglich erstreckenden Gehäuseabschnitts geführt sein. Beispielsweise kann somit mittels des weiteren Strahlengangs 80 ein Durchmesser bzw. die Form von Bohrlöchern oder sonstigen Vertiefungen ermittelt werden. Der Strahlengang durch das Frontoptikelement 36 kann in diesem Fall vor allem die Aufgabe erfüllen, die Tiefe eines Bohrlochs zu messen und/oder eine Kollision der Messeinrichtung 10 mit dem Ende des Bohrlochs zu vermeiden.

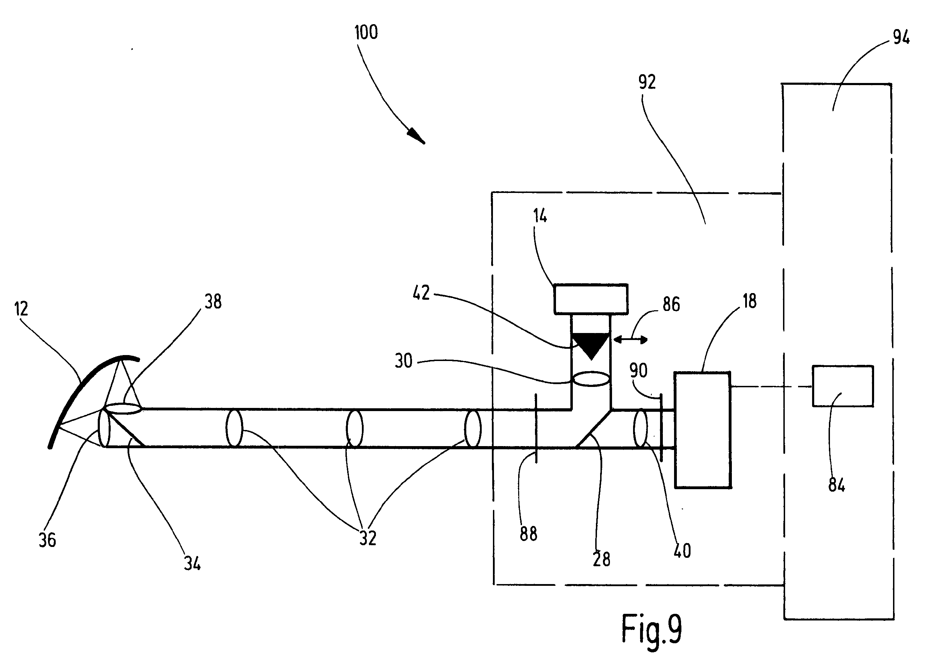

In der Fig. 9 ist eine Ausführungsform einer Vorrichtung 100 dargestellt, die die Messeinrichtung 10 aufweist. Bei der Vorrichtung 100 kann es sich beispielsweise um ein Koordinatenmessgerät handeln. Das Koordinatenmessgerät 100 weist eine Tragstruktur 94 auf, die beispielsweise die Auswertungseinrichtung 84 trägt und einen Sensorkopf 92 in drei Dimensionen verfahren kann, der die Messeinrichtung 10 aufweist.

Grundsätzlich kann vorgesehen sein, dass die Transmissionsstruktur 42 austauschbar ausgestaltet ist, wie mit einem Pfeil 86 angedeutet ist. Auf diese Weise können verschiedene Transmissionsstrukturen nutzbar spezifisch gewählt werden.

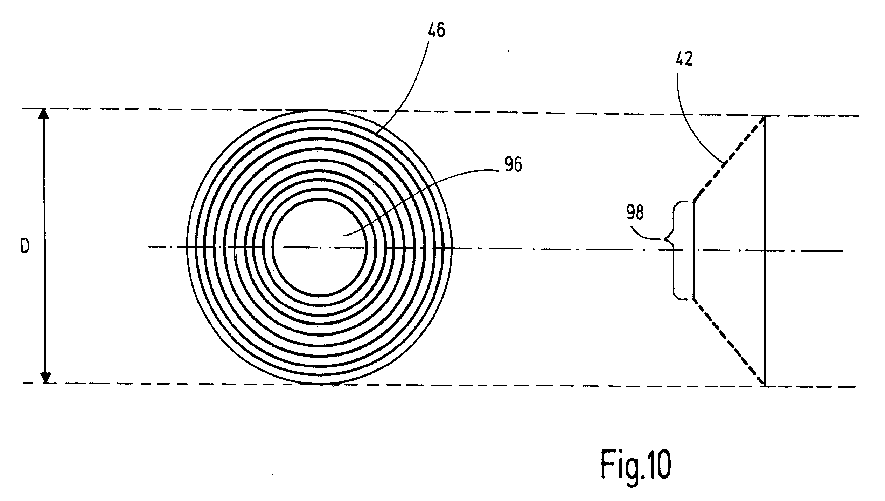

Wie in der Fig. 10 dargestellt ist, können beispielsweise Transmissionsstrukturen eingesetzt werden, die nicht vollflächig ein Beleuchtungsmuster 46 aufweisen. Beispielsweise kann ein freier Mittenbereich 96 vorgesehen sein. So dass in dem freien Mittenbereich 96 des Beleuchtungsmusters 46 eine normale Bildaufnahme erfolgt. Dies wird erreicht, indem beispielsweise ein Mittenbereich 98 der Transmissionsstruktur 42 keinerlei Strukturierung aufweist und eine Beleuchtungsstrahlung unabgelenkt durchtreten lässt.

Auf diese Weise wird erreicht, dass eine Modularität in der Messeinrichtung 10 gegeben ist. In einer Vorrichtung 100 kann die Messeinrichtung 10 als klassische Sensoreinheit wie ein klassischer taktiler Messkopf oder ein klassischer optischer Tastkopf austauschbar ausgestaltet sein. Ein Wechsel der Transmissionsstruktur 42 kann dazu genutzt werden, die Sensoreinheit flexibel an die Eigenschaften eines zu vermessenden Messobjekts 12 anzupassen. Wird die Transmissionsstruktur 42 vollständig entfernt, kann beispielsweise die Ausführungsform der Fig. 9 als normale Kameraanordnung mit zwei Blickrichtungen verwendet werden.

In einer weiteren Ausgestaltung kann vorgesehen sein, dass die Mustererzeugungseinrichtung 42, 36, 38 kombiniert mit der Beleuchtungseinrichtung 14 in Form eines LC-Displays (liquid crystal display) oder DMD (digital mirror device) bereitgestellt wird.

Unter Verwendung einer Transmissionsstruktur wie in der Fig. 10 kann die voranstehend geschilderte Abstandsmessung kombiniert mit einer normalen Bildaufnahme durch die freien Mittenbereiche 96 erfolgen.

Weitere Kombinationsmöglichkeiten können darin bestehen, einen Teil der Relaisoptik 32 für eine ergänzende optische Messung, beispielsweise eine OCT-Messung oder eine Streulichtmessung zu verwenden. Streulichtmessungen können insbesondere dafür genutzt, um neben der topologischen Information unmittelbar auch Rauhigkeitsinformationen über die Oberfläche zu erhalten. In diesem Fall kann innerhalb der Relaisoptik 32 auch noch ein weiterer Strahlteiler vorgesehen sein, um die entsprechenden Messstrahlengänge einzukoppeln.

Zwischen der optischen Sensoranordnung 18 und dem Strahlteiler 28 kann eine Trennstelle 90 vorgesehen sein, um ggf. unterschiedliche Ausführungen hinsichtlich Beleuchtungseinrichtung und Optik an die optische Sensoranordnung 18 anzukoppeln. Es kann messobjektseitig von dem Strahlteiler 28 eine Trennstelle 88 vorgesehen sein, so dass verschiedene Relaisoptiken 32 und Umlenkungen im Bereich des Strahlteilers 34 mit verschiedenen Frontoptikelementen 36 und Queroptikelementen 38 vorgesehen sein können. Es können auch verschiedene Strahlumlenkungen 78 auf diese Weise eingewechselt werden. Auf diese Weise kann beispielsweise eine Anpassung an unterschiedliche Messbereiche und Durchmesser von Bohrungen erfolgen.

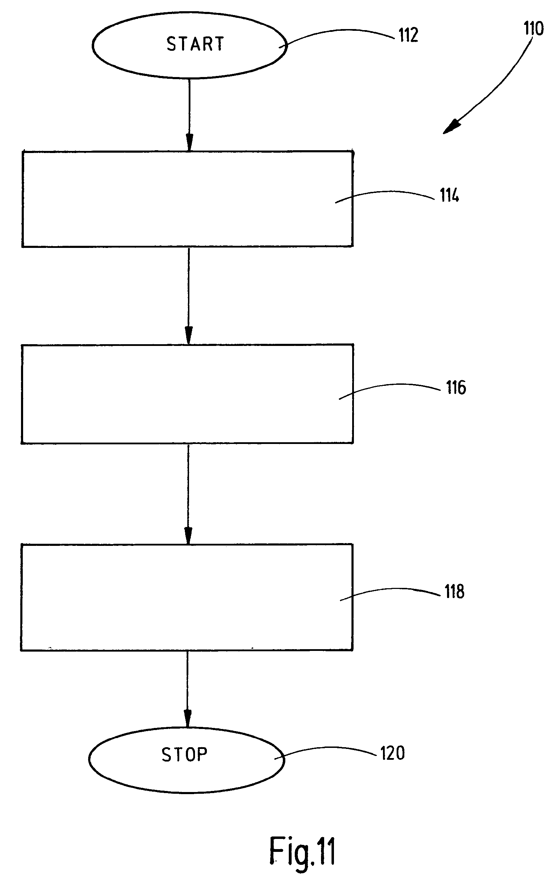

In der Fig. 11 ist ein schematisches Ablaufdiagramm eines Verfahrens 110 dargestellt.

Das Verfahren beginnt in einem Startschritt 112.

In einem ersten Schritt 114 erfolgt ein Beleuchten des Messobjekts 12 mit einem Beleuchtungsmuster 46 mit ortsvarianter Intensitätsverteilung, wobei das Beleuchtungsmuster 46 des Weiteren einen orts- und/oder spektralvariante messobjektseitige Schnittweite aufweist. In einem Schritt 116 erfolgt ein Erfassen des von dem Messobjekts 12 reflektierten und/oder gestreuten Beleuchtungsmusters mittels der optischen Sensoranordnung 18.

In einem Schritt 118 erfolgt dann ein Auswerten einer Bildschärfe und/oder einer Spektralverteilung, insbesondere einer spektralen Intensitätsverteilung, über dem gesamten erfassten, insbesondere mittels der optischen Sensoranordnung 18 erfassten, Beleuchtungsmuster 46. Im Rahmen der Auswertung kann auch eine Bildauswertung dahingehend erfolgen, um schnell und sicher Kollisionen zu erkennen, beispielsweise wenn ein erfasster Abstand an der Oberfläche des Messobjekts 12 kontinuierlich abnimmt. Auf diese Weise kann insbesondere eine Vorwarnung bzw. Früherkennung einer Kollision erfolgen oder eine Applikation als Annäherungssensor implementiert werden.

Das Verfahren endet dann in einem Stoppschritt 120.

## Patentansprüche

1. Messeinrichtung (10) zum Vermessen eines Messobjekts (12), mit einer Beleuchtungseinrichtung (14) zum Beleuchten des Messobjekts (12) mit einem Beleuchtungsmuster (46), einer Mustererzeugungseinrichtung (16) mit zumindest einem Mustererzeugungselement (36, 38; 42) zum Herbeiführen einer ortsvarianten Intensitätsverteilung des Beleuchtungsmusters (46), und einer optischen Sensoranordnung (18) zum Erfassen des von dem Messobjekt (12) reflektierten und/oder gestreuten Beleuchtungsmusters (46), **dadurch gekennzeichnet, dass** die Messeinrichtung (10) des Weiteren eine zumindest messobjektseitig telezentrische Optik (44) aufweist, die in einem Strahlengang (24) von der Beleuchtungseinrichtung (14) auf das Messobjekt (12) angeordnet ist, wobei die optische Sensoranordnung (18) derart angeordnet ist, dass sie das Beleuchtungsmuster (46) durch zumindest einen Teil der telezentrischen Optik (44) erfasst, und wobei die Mustererzeugungseinrichtung (16) mit dem zumindest einen Mustererzeugungselement (36, 38; 42) derart ausgebildet ist, dass das Beleuchtungsmuster (46) eine orts- und/oder spektralvariante messobjektseitige Schnittweitenverteilung (52, 54, 56) aufweist.

2. Messeinrichtung nach Anspruch 1 , **dadurch gekennzeichnet, dass** die optische Sensoranordnung (18) eine Kamera ist, und wobei die Mustererzeugungseinrichtung (16) mit dem zumindest einen Mustererzeugungselement (36, 38; 42) derart ausgebildet ist, dass das Beleuchtungsmuster (46) eine ortsvariante messobjektseitige Schnittweitenverteilung (52, 54, 56) aufweist.

3. Messeinrichtung nach Anspruch 1 oder 2, **dadurch gekennzeichnet, dass** die optische Sensoranordnung (18) ein Spektrometer oder ein spektral auflösender zweidimensionaler Sensor ist, und wobei die Mustererzeugungseinrichtung (16) mit dem zumindest einen Mustererzeugungselement (36, 38; 42) derart ausgebildet ist, dass das Beleuchtungsmuster (46) eine spektralvariante messobjektseitige Schnittweitenverteilung (52, 54, 56) aufweist.

4. Messeinrichtung nach einem der Ansprüche 1 bis 3, **dadurch gekennzeichnet, dass** ein Mustererzeugungselement (36, 38; 42) der Mustererzeugungseinrichtung (16) eine Transmissionsstruktur (42) ist, die sich zumindest teilweise schräg zu dem Strahlengang (24) erstreckt.

5. Messeinrichtung nach einem der Ansprüche 1 bis 4, **dadurch gekennzeichnet, dass** ein erstes Mustererzeugungselement (36, 38; 42) der Mustererzeugungseinrichtung (16) eine ebene Transmissionsstruktur (42) ist, die sich senkrecht zu dem Strahlengang (24) erstreckt, und wobei ein zweites Mustererzeugungselement (36, 38) der Mustererzeugungseinrichtung (16) ein refraktives optisches Element mit einer chromatischen Längsaberration oder ein optisches Element mit einer sphärischen Aberration ist.

6. Messeinrichtung nach einem der Ansprüche 1 bis 4, **dadurch gekennzeichnet, dass** die Optik (44) des Weiteren einen ersten Strahlteiler (34) aufweist, der den Strahlengang (24) in einen ersten Messstrahlengang (102) und in einen zweiten Messstrahlengang (104) teilt, wobei der erste Messstrahlengang (102) und der zweite Messstrahlengang (104) senkrecht zueinander ausgerichtet sind.

7. Messeinrichtung nach Anspruch 6, **dadurch gekennzeichnet, dass** der erste Strahlteiler (34) ein dichroitischer Strahlteiler ist.

8. Messeinrichtung nach Anspruch 6, **dadurch gekennzeichnet, dass** der erste Strahlteiler (34) ein polarisationsoptischer Strahlteiler ist.

9. Messeinrichtung nach einem der Ansprüche 5 bis 8, **dadurch gekennzeichnet, dass** das zweite Mustererzeugungselement (36, 38) der Mustererzeugungseinrichtung (16) ein refraktives optisches Element mit einer chromatischen Längsaberration ist, wobei die Optik (44) derart ausgebildet ist, dass ein Zwischenbild (63) in der Optik (44) erzeugt ist, und wobei ein chromatischer Verlaufsfilter (65) in einer Ebene (64) des Zwischenbilds (63) angeordnet ist.

10. Messeinrichtung nach einem der Ansprüche 1 bis 9, **dadurch gekennzeichnet, dass** das von der Mustererzeugungseinrichtung (16) erzeugte Beleuchtungsmuster (46) ein rasterförmiges Punktmuster ist, wobei zwischen der Optik (44) und der optischen Sensoranordnung (18) eine Lochmusteranordnung (66) angeordnet ist, wobei jedes Loch der Lochmusteranordnung mittels eines Lichtleiters (68) mit der optischen Sensoranordnung (18) verbunden ist.

11. Messeinrichtung nach Anspruch 10, **dadurch gekennzeichnet, dass** die optische Sensoranordnung (18) ein Multizeilenspektrometer ist.

12. Messeinrichtung nach einem der Ansprüche 1 bis 1 1 , **dadurch gekennzeichnet, dass** die Messeinrichtung ein Gehäuse mit einem sich länglich erstreckenden Gehäuseabschnitt (22) aufweist, wobei die Optik (44) eine Relaisoptik (32) in dem sich länglich erstreckenden Gehäuseabschnitt (22) aufweist, und wobei der Strahlengang (24) von der Beleuchtungseinrichtung (14) auf das Messobjekt (12) und ein Erfassungsstrahlengang (26) von dem Messobjekt (12) auf die optische Sensoranordnung (18) durch die Relaisoptik (32) parallel zueinander verlaufen.

13. Messeinrichtung nach einem der Ansprüche 1 bis 12, **dadurch gekennzeichnet, dass** die Messeinrichtung des Weiteren eine weitere Beleuchtungseinrichtung (70) zum Beleuchten des Messobjekts (12) mit einem weiteren Beleuchtungsmuster (46), eine weitere Mustererzeugungseinrichtung (76) mit zumindest einem Mustererzeugungselement zum Herbeiführen einer ortsvarianten Intensitätsverteilung des weiteren Beleuchtungsmusters (46), eine weitere zumindest messobjektseitig telezentrische Optik (74), die in einem weiteren Strahlengang (80) von der weiteren Beleuchtungseinrichtung (70) auf das Messobjekt (12) angeordnet ist, und eine weitere optische Sensoranordnung (72) zum Erfassen des von dem Messobjekt (12) reflektierten und/oder gestreuten Beleuchtungsmusters (46) aufweist, wobei die weitere optische Sensoranordnung (72) derart angeordnet ist, dass sie das Beleuchtungsmuster (46) durch zumindest einen Teil der weiteren telezentrischen Optik (74) erfasst, und wobei die weitere Mustererzeugungseinrichtung (76) mit dem zumindest einen Mustererzeugungselement derart ausgebildet ist, dass das weitere Beleuchtungsmusters (46) eine orts- und/oder spektralvariante messobjektseitige Schnittweitenverteilung (52, 54, 56) aufweist, und wobei die weitere Optik (44) zumindest ein Strahlumlenkungselement (78) zum Aufweiten des weiteren Strahlengangs (80) über zumindest einen Umfangsbogenabschnitt (82) senkrecht zu dem Strahlengang (24) auf das Messobjekt (12) aufweist.

14. Vorrichtung (100) zum Vermessen eines Messobjekts (12) mit einer Messeinrichtung (10) nach einem der Ansprüche 1 bis 13, **dadurch gekennzeichnet**, das die Vorrichtung (100) des Weiteren zumindest eine Auswertungseinheit (84) zum Auswerten eines mittels der optischen Sensoranordnung (18) und/oder der weiteren optischen Sensoranordnung (74) erfassten Bildes aufweist.

15. Verfahren zum Vermessen eines Messobjekts (12), mit den folgenden Schritten:
- Beleuchten (114) des Messobjekts (12) mit einem Beleuchtungsmuster (46) mit ortsvarianter Intensitätsverteilung mittels einer Beleuchtungseinrichtung (14), wobei das Beleuchtungsmuster (46) des Weiteren eine orts- und/oder spektralvariante messobjektseitige Schnittweitenverteilung (52, 54, 56) aufweist,
- Erfassen (116) des von dem Messobjekt (12) reflektierten und/oder gestreuten Beleuchtungsmusters (46) mittels einer optischen Sensoranordnung (18), wobei die optische Sensoranordnung (18) derart ausgebildet ist, dass sie das Beleuchtungsmuster (46) durch zumindest einen Teil einer zumindest messobjektseitig telezentrischen Optik (44) erfasst, die in einem Strahlengang (24) von der Beleuchtungseinrichtung (14) auf das Messobjekt (12) angeordnet ist, und
- Auswerten (118) einer Bildschärfe und/oder einer Spektralverteilung über dem gesamten erfassten Beleuchtungsmuster (46).

## Claims

1. Measuring device (10) for measuring a measurement object (12), comprising an illumination device (14) for illuminating the measurement object (12) with an illumination pattern (46), a pattern generation device (16) with at least one pattern generating element (36, 38; 42) for bringing about a positionally variant intensity distribution of the illumination pattern (46), and an optical sensor arrangement (18) for detecting the illumination pattern (46) reflected and/or scattered by the measurement object (12), **characterized in that** the measuring device (10) furthermore has an optical unit (44) which is telecentric at least on the measurement object side and which is arranged in a beam path (24) from the illumination device (14) to the measurement object (12), wherein the optical sensor arrangement (18) is arranged in such a way that it detects the illumination pattern (46) through at least one part of the telecentric optical unit (44), and wherein the pattern generating device (16) with the at least one pattern generating element (36, 38; 42) is designed in such a way that the illumination pattern (46) has a positionally and/or spectrally variant vertex focal length distribution (52, 54, 56) on the measurement object side.

2. Measuring device according to Claim 1, **characterized in that** the optical sensor arrangement (18) is a camera, and wherein the pattern generating device (16) with the at least one pattern generating element (36, 38; 42) is designed in such a way that the illumination pattern (46) has a positionally variant vertex focal length distribution (52, 54, 56) on the measurement object side.

3. Measuring device according to Claim 1 or 2, **characterized in that** the optical sensor arrangement (18) is a spectrometer or a spectrally resolving two-dimensional sensor, and wherein the pattern generating device (16) with the at least one pattern generating element (36, 38; 42) is designed in such a way that the illumination pattern (46) has a spectrally variant vertex focal length distribution (52, 54, 56) on the measurement object side.

4. Measuring device according to any of Claims 1 to 3, **characterized in that** a pattern generating element (36, 38; 42) of the pattern generating device (16) is a transmission structure (42) extending at least partly obliquely with respect to the beam path (24).

5. Measuring device according to any of Claims 1 to 4, **characterized in that** a first pattern generating element (36, 38; 42) of the pattern generating device (16) is a planar transmission structure (42) extending perpendicular to the beam path (24), and wherein a second pattern generating element (36, 38) of the pattern generating device (16) is a refractive optical element having a longitudinal chromatic aberration or an optical element having a spherical aberration.

6. Measuring device according to any of Claims 1 to 4, **characterized in that** the optical unit (44) furthermore has a first beam splitter (34), which splits the beam path (24) into a first measurement beam path (102) and into a second measurement beam path (104), wherein the first measurement beam path (102) and the second measurement beam path (104) are oriented perpendicular to one another.

7. Measuring device according to Claim 6, **characterized in that** the first beam splitter (34) is a dichroic beam splitter.

8. Measuring device according to Claim 6, **characterized in that** the first beam splitter (34) is a polarization-optical beam splitter.

9. Measuring device according to any of Claims 5 to 8, **characterized in that** the second pattern generating element (36, 38) of the pattern generating device (16) is a refractive optical element having a longitudinal chromatic aberration, wherein the optical unit (44) is designed in such a way that an intermediate image (63) is generated in the optical unit (44), and wherein a chromatic graduated filter (65) is arranged in a plane (64) of the intermediate image (63).

10. Measuring device according to any of Claims 1 to 9, **characterized in that** the illumination pattern (46) generated by the pattern generating device (16) is a grid-shaped point pattern, wherein a hole pattern arrangement (66) is arranged between the optical unit (44) and the optical sensor arrangement (18), wherein each hole of the hole pattern arrangement is connected to the optical sensor arrangement (18) by means of an optical waveguide (68).

11. Measuring device according to Claim 10, **characterized in that** the optical sensor arrangement (18) is a multi-line spectrometer.

12. Measuring device according to any of Claims 1 to 11, **characterized in that** the measuring device has a housing having a housing section (22) extending in elongate fashion, wherein the optical unit (44) has a relay optical unit (32) in the housing section (22) extending in elongate fashion, and wherein the beam path (24) from the illumination device (14) to the measurement object (12) and a detection beam path (26) from the measurement object (12) to the optical sensor arrangement (18) run parallel to one another through the relay optical unit (32).

13. Measuring device according to any of Claims 1 to 12, **characterized in that** the measuring device furthermore has a further illumination device (70) for illuminating the measurement object (12) with a further illumination pattern (46), a further pattern generating device (76) with at least one pattern generating element for bringing about a positionally variant intensity distribution of the further illumination pattern (46), a further optical unit (74) which is telecentric at least on the measurement object side and which is arranged in a further beam path (80) from the further illumination device (70) to the measurement object (12), and a further optical sensor arrangement (72) for detecting the illumination pattern (46) reflected and/or scattered by the measurement object (12), wherein the further optical sensor arrangement (72) is arranged in such a way that it detects the illumination pattern (46) through at least one part of the further telecentric optical unit (74), and wherein the further pattern generating device (76) with the at least one pattern generating element is designed in such a way that the further illumination pattern (46) has a positionally and/or spectrally variant vertex focal length distribution (52, 54, 56) on the measurement object side, and wherein the further optical unit (44) has at least one beam deflecting element (78) for expanding the further beam path (80) via at least one circumferential arc section (82) perpendicular to the beam path (24) to the measurement object (12).

14. Apparatus (100) for measuring a measurement object (12) comprising a measuring device (10) according to any of Claims 1 to 13, **characterized in that** the apparatus (100) furthermore has at least one evaluation unit (84) for evaluating an image detected by means of the optical sensor arrangement (18) and/or the further optical sensor arrangement (74).

15. Method for measuring a measurement object (12), comprising the following steps:
- illuminating (114) the measurement object (12) with an illumination pattern (46) with positionally variant intensity distribution by means of an illumination device (14), wherein the illumination pattern (46) furthermore has a positionally and/or spectrally variant vertex focal length distribution (52, 54, 56) on the measurement object side,
- detecting (116) the illumination pattern (46) reflected and/or scattered by the measurement object (12) by means of an optical sensor arrangement (18), wherein the optical sensor arrangement (18) is designed in such a way that it detects the illumination pattern (46) through at least one part of an optical unit (44) which is telecentric at least on the measurement object side and is arranged in a beam path (24) from the illumination device (14) to the measurement object (12), and
- evaluating (118) an image sharpness and/or a spectral distribution over the entire detected illumination pattern (46).

## Revendications

1. Dispositif de mesure (10) pour la mesure d'un objet à mesurer (12), comportant un dispositif d'éclairage (14) pour éclairer l'objet à mesurer (12) avec un motif d'éclairage (46), un dispositif de génération de motif (16) comportant au moins un élément de génération de motif (36, 38; 42) pour provoquer une répartition d'intensité à localisation variable du motif d'éclairage (46) et un dispositif de détection optique (18) pour détecter le motif d'éclairage (46) réfléchi et/ou diffusé par l'objet à mesurer (12), **caractérisé en ce que** le dispositif de mesure (10) présente en outre une optique télécentrique du moins du côté de l'objet à mesurer (44) qui est disposée dans un parcours optique (24) du dispositif d'éclairage (14) vers l'objet à mesurer (12), le dispositif de détection optique (18) étant disposé de manière à détecter le motif d'éclairage (46) par au moins une partie de l'optique télécentrique (44), et le dispositif de génération de motif (16) comportant l'au moins un élément de génération de motif (36, 38; 42) étant réalisé de manière à ce que le motif d'éclairage (46) présente une répartition de tirage optique à localisation et/ou spectre variables du côté de l'objet à mesurer (52, 54, 56),

2. Dispositif de mesure selon la revendication 1, **caractérisé en ce que** le dispositif de détection optique (18) est une caméra, le dispositif de génération de motif (16) comportant l'au moins un élément de génération de motif (36, 38; 42) étant réalisé de manière à ce que le motif d'éclairage (46) présente une répartition de tirage optique à localisation variable du côté de l'objet à mesurer (52, 54, 56).

3. Dispositif de mesure selon la revendication 1 ou 2, **caractérisé en ce que** le dispositif de détection optique (18) est un spectromètre ou un capteur bidimensionnel à définition spectrale, le dispositif de génération de motif (16) comportant l'au moins un élément de génération de motif (36, 38; 42) étant réalisé de manière à ce que le motif d'éclairage (46) présente une répartition de tirage optique à spectre variable du côté de l'objet à mesurer (52, 54, 56).

4. Dispositif de mesure selon l'une quelconque des revendications 1 à 3, **caractérisé en ce qu'**un élément de génération de motif (36, 38; 42) du dispositif de génération de motif (16) est une structure de transmission (42) qui s'étend du moins partiellement à l'oblique du parcours optique (24).

5. Dispositif de mesure selon l'une quelconque des revendications 1 à 4, **caractérisé en ce qu'**un premier élément de génération de motif (36, 38; 42) du dispositif de génération de motif (16) est une structure de transmission plane (42) qui s'étend perpendiculairement au parcours optique (24), un second élément de génération de motif (36, 38) du dispositif de génération de motif (16) étant un élément optique réfractif à aberration chromatique longitudinale ou un élément optique à aberration sphérique.

6. Dispositif de mesure selon l'une quelconque des revendications 1 à 4, **caractérisé en ce que** l'optique (44) présente en outre un premier séparateur de faisceau (34) qui divise le parcours optique (24) en un premier parcours optique de mesure (102) et un second parcours optique de mesure (104), le premier parcours optique de mesure (102) et le second parcours optique de mesure (104) étant orientés perpendiculairement l'un à l'autre.

7. Dispositif de mesure selon la revendication 6, **caractérisé en ce que** le premier parcours optique de mesure (34) est un séparateur de faisceau dichroïque.

8. Dispositif de mesure selon la revendication 6, **caractérisé en ce que** le premier séparateur de faisceau (34) est un séparateur de faisceau de polarisation optique.

9. Dispositif de mesure selon l'une quelconque des revendications 5 à 8, **caractérisé en ce que** le second élément de génération de motif (36, 38) du dispositif de génération de motif (16) est un élément optique réfractif à aberration longitudinale chromatique, l'optique (44) étant réalisée de manière à ce qu'une image intermédiaire (63) soit générée dans l'optique (44), un filtre dégradé chromatique (65) étant disposé dans un plan (64) de l'image intermédiaire (63).

10. Dispositif de mesure selon l'une quelconque des revendications 1 à 9, **caractérisé en ce que** le motif d'éclairage (46) généré par le dispositif de génération de motif (16) est un motif pointillé tramé, un dispositif à motif perforé (66) étant disposé entre l'optique (44) et le dispositif de détection optique (18), chaque trou du dispositif à motif perforé étant relié au moyen d'un conducteur de lumière (68) au dispositif de détection optique (18).

11. Dispositif de mesure selon la revendication 10, **caractérisé en ce que** le dispositif de détection optique (18) est un spectromètre multiligne.

12. Dispositif de mesure selon l'une quelconque des revendications 1 à 11, **caractérisé en ce que** le dispositif de mesure présente un boîtier comportant une section de boîtier (22) s'étendant longitudinalement, l'optique (44) présentant une optique relais (32) dans la section de boîtier s'étendant longitudinalement (22) et le parcours optique (24) du dispositif d'éclairage (14) vers l'objet à mesurer (12) et un parcours optique de détection (26) de l'objet à mesurer (12) vers le dispositif de détection optique (18) à travers l'optique relais (32) s'étendant parallèlement l'un à l'autre.

13. Dispositif de mesure selon l'une quelconque des revendications 1 à 12, **caractérisé en ce que** le dispositif de mesure présente en outre un autre dispositif d'éclairage (70) pour éclairer l'objet à mesurer (12) avec un autre motif d'éclairage (46), un autre dispositif de génération de motif (76) comportant au moins un élément de génération de motif pour entraîner une répartition d'intensité à localisation variable de l'autre motif d'éclairage (46), une autre optique télécentrique (74) du moins du côté de l'objet à mesurer, qui est disposée dans un autre parcours optique (80) de l'autre dispositif d'éclairage (70) vers l'objet à mesurer (12), et un autre dispositif de détection optique (72) pour détecter le motif d'éclairage (46) réfléchi et/ou diffusé par l'objet à mesurer (12), l'autre dispositif de détection optique (72) étant disposé de manière à détecter le motif d'éclairage (46) par au moins une partie de l'autre optique télécentrique (74) et l'autre dispositif de génération de motif (76) comportant l'au moins un élément de génération de motif étant réalisé de manière à ce que l'autre motif d'éclairage (46) présente une répartition de tirage optique à localisation et/ou à spectre variables du côté de l'objet à mesurer (52, 54, 56), l'autre optique (44) présentant au moins un élément de déviation de rayons (78) pour élargir l'autre parcours optique (80) sur au moins une section arquée circonférentielle (82) perpendiculairement au parcours optique (24) vers l'objet à mesurer (12).

14. Dispositif (100) de mesure d'un objet à mesurer (12) comportant un dispositif de mesure (10) selon l'une quelconque des revendications 1 à 13, **caractérisé en ce que** le dispositif (100) présente en outre au moins une unité d'exploitation (84) pour exploiter une image détectée au moyen du dispositif de détection optique (18) et/ou de l'autre dispositif de détection optique (74).

15. Procédé de mesure d'un objet à mesurer (12), comprenant les étapes suivantes :
- éclairage (114) de l'objet à mesurer (12) avec un motif d'éclairage (46) à répartition d'intensité à localisation variable au moyen d'un dispositif d'éclairage (14), le motif d'éclairage (46) présentant en outre une répartition de tirage optique (52, 54, 56) à localisation et/ou spectre variables du côté de l'objet à mesurer,
- détection (116) du motif d'éclairage (46) réfléchi et/ou diffusé par l'objet à mesurer (12) au moyen d'un dispositif de détection optique (18), le dispositif de détection optique (18) étant réalisé de manière à détecter le motif d'éclairage (46) par au moins une partie d'une optique télécentrique du moins du côté de l'objet à mesurer (44), qui est disposée dans un parcours optique (24) du dispositif d'éclairage (14) vers l'objet à mesurer (12), et
- évaluation (118) d'une netteté d'image et/ou d'une répartition spectrale sur l'ensemble du motif d'éclairage détecté (46).
